(19) Europäisches Patentamt
European Patent Office
Office européen des brevets

(11) EP 4 190 851 B1

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **21211670.1**

(22) Anmeldetag: **01.12.2021**

(51) Internationale Patentklassifikation (IPC):
***C08K 5/13*** $^{(2006.01)}$ ***C08K 5/18*** $^{(2006.01)}$
***C08K 5/372*** $^{(2006.01)}$ ***C08K 5/5313*** $^{(2006.01)}$
***C08K 7/14*** $^{(2006.01)}$ ***C08K 3/32*** $^{(2006.01)}$

(52) Gemeinsame Patentklassifikation (CPC):
(C-Sets verfügbar)
**C08K 3/32; C08K 5/13; C08K 5/18; C08K 5/372; C08K 5/5313; C08K 7/14** (Forts.)

(54) **POLYAMID BASIERTE ERZEUGNISSE**
POLYAMIDE-BASED PRODUCTS
PRODUITS À BASE DE POLYAMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.06.2023 Patentblatt 2023/23**

(73) Patentinhaber: **Envalior Deutschland GmbH**
**40474 Düsseldorf (DE)**

(72) Erfinder:
- **GAU, Elisabeth**
  **40474 DÜSSELDORF (DE)**
- **CAUDAL, Jan**
  **40474 DÜSSELDORF (DE)**
- **RUDOLF, Marc**
  **40474 DÜSSELDORF (DE)**
- **JOACHIMI, Detlev**
  **40474 DÜSSELDORF (DE)**
- **ENDTNER, Jochen**
  **40474 DÜSSELDORF (DE)**
- **KÖRTE, Leif**
  **40474 DÜSSELDORF (DE)**
- **BIENMÜLLER, Matthias**
  **40474 DÜSSELDORF (DE)**

(74) Vertreter: **Envalior Association**
**Urmonderbaan 22**
**6167 RD Geleen (NL)**

(56) Entgegenhaltungen:
**WO-A1-2018/202791** **GB-A- 2 584 307**
**JP-A- H11 323 110** **US-A1- 2019 300 699**

- **DATABASE CA [online] CHEMICAL ABSTRACTS SERVICE, COLUMBUS, OHIO, US; 26 November 1999 (1999-11-26), FURUTA, YOKO ET AL: "Polyester elastomer resin compositions for blow molding", XP002806234, retrieved from STN Database accession no. 1999:751652**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08K 3/32, C08L 77/02;**
**C08K 3/32, C08L 77/10;**
**C08K 5/13, C08L 77/02;**
**C08K 5/13, C08L 77/10;**
**C08K 5/18, C08L 77/02;**
**C08K 5/18, C08L 77/10;**
**C08K 5/372, C08L 77/02;**
**C08K 5/372, C08L 77/10;**
**C08K 5/5313, C08L 77/02;**
**C08K 5/5313, C08L 77/10;**
**C08K 7/14, C08L 77/02;**
**C08K 7/14, C08L 77/10**

## Beschreibung

Die vorliegende Erfindung betrifft Polyamid basierte Erzeugnisse auf Basis von Zusammensetzungen enthaltend wenigstens ein sterisch gehindertes Phenol, wenigstens ein Phosphinsäurederivat, wenigstens ein 3-Thiopropionat sowie 4,4'-Bis(phenylisopropyl)diphenylamin und die Verwendung von Letzterem als Additiv zur Herstellung Polyamid basierter Erzeugnisse mit verbessertem Erhalt der Bruchdehnung, verbesserter Farbstabilität sowie gleichzeitig verbesserter UV-Stabilität nach Thermoalterung im Vergleich zu Polyamid basierten Erzeugnissen basierend auf Zusammensetzungen enthaltend wenigstens ein sterisch gehindertes Phenol, wenigstens ein Phosphinsäurederivat und wenigstens ein 3-Thiopropionat.

Während über viele Jahre der Verbrennungsmotor das dominierende Antriebskonzept darstellte, ergeben sich im Zuge der Suche nach alternativen Antriebskonzepten auch neue Anforderungen hinsichtlich der Materialauswahl. Eine wesentliche Rolle spielt dabei die Elektromobilität, bei welcher der Verbrennungsmotor in Hybridfahrzeugen teilweise oder in Elektromobilen vollständig durch einen oder mehrere Elektromotoren ersetzt wird, die ihre elektrische Energie typischerweise aus Batterien oder Brennstoffzellen beziehen. Während konventionelle Fahrzeuge mit Verbrennungsmotor als alleinigem Antrieb typischerweise mit einem Bordspannungsnetz von 12V auskommen, werden in Hybrid- und Elektrofahrzeugen mit Elektromotoren als Antriebseinheit wesentlich höhere Spannungen benötigt. Dies stellt für den direkten Bereich und die unmittelbare Umgebung von derartig spannungsführenden Komponenten ein ernstzunehmendes zusätzliches Gefahrenpotential dar, was in technischen Spezifikationen oder auch normativ zunehmend eine Rolle spielt. Eine wichtige Rolle spielt dabei die eindeutige Kennzeichnung dieser Hochvolt Gefährdungsbereiche, um auf diese Weise einen unbeabsichtigten Kontakt mit einem Menschen, insbesondere Fahrer oder Mechaniker, zu vermeiden, wobei wiederum die eindeutige farbliche Kennzeichnung, insbesondere die farbliche Kennzeichnung in Orange, von Polyamid basierten Erzeugnissen in Hochvoltanwendungen eine besonders wichtige Rolle spielt. Die deutsche gesetzliche Unfallversicherung DGUV beschreibt in ihrer Information BGI / GUV-I 8686 zur "Qualifizierung für Arbeiten an Fahrzeugen mit Hochvoltsystemen" den Begriff Hochvolt, insbesondere bei Hybrid- und Brennstoffzellentechnologie sowie Elektrofahrzeugen, umfassend Spannungen >60 V und <1500V für Gleichspannungsbereich und >30V und 1000V für Wechselspannung.

Allerdings unterliegen Polyamid basierte Erzeugnisse bei Einwirkung äußerer Einflüsse, insbesondere von Licht, UV-Strahlen, Wärme oder widrigen Wetterbedingungen, Abbauerscheinungen. Abbauerscheinungen treten insbesondere infolge des Einwirkens hoher auftretender Temperaturen auf. Das Ergebnis solcher Abbauerscheinungen wird im Allgemeinen in Form eines Verlusts der mechanischen Eigenschaften, insbesondere der Schlagzähigkeit, der Bruchdehnung und insbesondere als Verfärbung wahrgenommen. Gerade aber Abbauprozesse in Form unerwünschter Verfärbungen sind im Falle eingefärbter Polyamid basierter Erzeugnisse, insbesondere orange eingefärbter Polyamid basierter Erzeugnisse im Hochvoltbereich unerwünscht, da in einem solchen Fall eine eindeutige und gleichbleibende farbliche Kennzeichnung über die Einsatzdauer, z.B. in Kraftfahrzeugen, nicht gewährleistet ist. Ebenfalls ist bei Anwendungen im sichtbaren Bereich mit Kontakt zu UV-Strahlung eine Verfärbung unerwünscht. Beispiele solcher Anwendungen außerhalb des Automobilbereichs sind im Haushaltsbereich insbesondere Haartrockner oder Haarglätter, die aus ästhetischen Gründen in weißer Farbe oder hellen Pastelltönen gestaltet werden.

Anwendungen Polyamid basierter Erzeugnisse im Automobilbereich, vorzugsweise Anwendungen in der E-Mobilität, insbesondere im Hochvoltbereich wie Ladestecker, erfordern neben Anforderungen wie Steifigkeit in Form des E-Moduls, ferner eine gute Schlagzähigkeit sowie eine gute Bruchdehnung. So können Polyamid basierte Erzeugnisse für die Anwendung im Hochvoltbereich beim Ein- und Ausbau sowie im Gebrauch im Kraftfahrzeug hohen mechanischen Kräften ausgesetzt sein und dürfen dabei nicht zerbrechen. Auch der Erhalt der Schlagzähigkeit und der Bruchdehnung über die Fahrzeuglebensdauer muss gewährleistet sein.

Die Lösung des Standes der Technik zur Verbesserung der Schlagzähigkeit von Polyamid basierten Zusammensetzungen ist der Einsatz amorpher Kunststoffe wie ABS oder Elastomere in Polyamid basierten Blends, wie im Kunststoffhandbuch 3/4, Technische Thermoplaste, Polyamide, Karl Hansen Verlag, München, Wien, 1998, S16 und S. 148 - 150 beschrieben. Solche Polymere, die in anderen Polymeren wie insbesondere Polyamid zur Erhöhung der Schlagzähigkeit eingesetzt werden, werden in der Fachsprache als Modifikatoren oder Schlagzähmodifikatoren bezeichnet und sind deshalb auch erfindungsgemäß als Schlagzähmodifikatoren zu bezeichnen. Als geeignete Schlagzähmodifikatoren werden in Polyamiden Ethylen-Propylen-Kautschuke (EPM, EPR) oder Ethylen-Propylen-Dien-Kautschuke (EPDM), styrolhaltige Elastomere, z.B. SEBS, SBS, SEPS, oder Acrylatkautschuke eingesetzt. Als Schlagzähmodifikatoren sind aber auch Nitril-Kautschuke (NBR, H-NBR), Siliconkautschuke, EVA und Microgele, wie sie in der WO 2005/033185 A1 beschrieben sind, geeignet. Untersuchungen im Rahmen der **Dissertation von S. Moll zu "Untersuchung der Auswirkungen einer thermischoxidativen Beanspruchung auf das Emissionsverhalten von ABS und PP und der Korrelation mit dem Alterungsgrad"** aus **2016** zeigten aber, dass sich Poly-(AcrylnitrilButadien-Styrol) "ABS" unter thermisch-oxidativer Belastung verfärbt. Zusätzlich ist dem Fachmann aus Kunststoffhandbuch 3/4, Technische Thermoplaste, Polyamide, Karl Hansen Verlag, München, Wien, 1998, S16 und S. 157 bekannt, dass durch Hinzufügen eines Schlagzähmodifikators die Steifigkeit in Form des E-Moduls, verschiedentlich auch Zugmodul

genannt, verringert. Deshalb erscheinen die im Stand der Technik beschriebenen und typischerweise in Polyamid einzusetzenden Schlagzähmodifikatoren ungeeignet, insbesondere wenn farblich gekennzeichnete Polyamid basierte Komponenten nicht zu Verfärbungen neigen sollen.

Die Schlagzähigkeit wird berechnet als das Verhältnis aus Schlagarbeit und Probenkörperquerschnitt (Maßeinheit: $kJ/m^2$). Durch verschiedene Arten des Schlagbiegeversuchs, sei es nach Charpy gemäß **DIN EN ISO 179,** oder nach Izod gemäß **DIN EN ISO 180,** kann die Schlagzähigkeit bestimmt werden. Gemessen wird die Schlagzähigkeit im Rahmen der vorliegenden Erfindung nach **ISO180-1U** an spritzgegossenen Probekörpern ($80 \cdot 10 \cdot 4$ $mm^3$) bei 23°C im spritzfrischen Zustand.

Dem Fachmann ist aus P. H. Selden, Glasfaserverstärkte Kunststoffe, Seite 324 - 325, Kapitel "Glasfaserverstärkte Thermoplaste" von K. Schlichting, Springer Verlag Berlin 1967 bekannt, dass der Glasfasergehalt einen Einfluss auf die Schlagzähigkeit einer Polyamidzusammensetzung hat. Da also Verstärkungsmaterialien, insbesondere Glasfasern, selbst die Schlagzähigkeit von Polyamiden beeinflussen, beziehen sich vergleichende Aussagen im Rahmen der vorliegenden Erfindung stets auf Zusammensetzungen oder Erzeugnisse mit demselben Gehalt an Verstärkungsmaterialien, insbesondere Glasfasern. Diese Aussage betrifft auch erfindungsgemäße Verfahren und Verwendungen.

Die Bruchdehnung (Maßeinheit %) stellt einen Indikator für die Verformungsfähigkeit eines Kunststoffes dar und ist laut **DIN EN ISO 527** der zuletzt aufgezeichnete Dehnungswert, bevor ein Spannungsabfall auf weniger als oder gleich 10% des Festigkeitswerts im Zugversuch erfolgt. Gemessen wird die Bruchdehnung im Rahmen der vorliegenden Erfindung nach **DIN EN ISO 527** an spritzgegossenen Probekörpern ($170 \cdot 10 \cdot 4$ $mm^3$), Zugstab Typ 1A) bei 23°C im spritzfrischen Zustand.

Zusammengefasst sind die Anforderungen an Polyamid basierte Erzeugnisse für Anwendungen in der E-Mobilität, insbesondere im Hochvoltbereich, vielseitig. Bei Anwendungen im Kraftfahrzeugbereich müssen sowohl die farbliche Kennzeichnung, als auch die mechanischen Eigenschaften, insbesondere die Schlagzähigkeit und die Bruchdehnung, über die Fahrzeuglebensdauer gewährleitet sein. Wie oben dargelegt ist der im Stand der Technik diskutierte Einsatz von Schlagzähmodifikatoren nicht geeignet, all diese Erfordernisse für Polyamide zufriedenstellend zu lösen.

Zusammensetzungen gemäß der europäischen Anmeldung 20177768.7 sowie das darin eingesetzte 3-Thiopropionat eignen sich zur Herstellung schlagzäher Polyamid basierter Erzeugnisse mit verbesserter Farbstabilität nach Thermoalterung. Jedoch weisen diese Erzeugnisse eine unzureichende UV-Stabilität auf und der Erhalt der Bruchdehnung nach 500 h Thermoalterung bei 150°C ist für Anwendungen im Kraftfahrzeugbereich sowie im Haushaltsbereich unbefriedigend.

Die Aufgabe der vorliegenden Erfindung bestand daher in der Bereitstellung Polyamid basierter Zusammensetzungen bzw. daraus herzustellender Erzeugnisse, die neben einer verbesserten Schlagzähigkeit gemessen nach **ISO180-1U** im Vergleich zu nicht mit Schlagzähmodifikator modifizierten Polyamidzusammensetzungen gleichzeitig ein gutes Alterungsverhalten in Form eines verbesserten Farberhalts bzw. einer verbesserten Farbstabilität nach Heißluftalterung sowie gleichzeitig einer verbesserten UV-Stabilität und zudem ein gutes Alterungsverhalten in Form eines ausreichenden Erhalts der Schlagzähigkeit und vor allem der Bruchdehnung nach Heißluftalterung aufweisen.

Unter einem guten Alterungsverhalten in Form eines verbesserten Farberhalts bzw. einer verbesserten Farbstabilität nach Heißluftalterung wird erfindungsgemäß verstanden, dass der Farbabstand $\Delta E$ berechnet gemäß **DIN EN ISO 11664-4** nach Heißluftlagerung über 500 h bei 150°C gering ausfällt, vorzugsweise der Farbabstand $\Delta E$ im Bereich von 0 bis 20 liegt, besonders bevorzugt der Farbabstand $\Delta E$ im Bereich von 0 bis 15 liegt. Der Farbabstand $\Delta E$ ist eine dimensionslose Größe. Je kleiner der Wert, desto geringer ist der Farbabstand zu einem Ausgangswert. Ein Farbabstand $\Delta E = 0$ entspricht demnach keiner Änderung der Farbe, sondern einer gleichbleibenden Farbe.

Unter einem guten Alterungsverhalten in Form einer verbesserten UV-Stabilität wird erfindungsgemäß verstanden, dass der Farbabstand $\Delta E$ berechnet gemäß **DIN EN ISO 11664-4** nach UV-Lagerung angelehnt an **DIN ISO 4892-2A** über 200h bei 80°C, 340 nm und 1,55 $W/m^2$ ohne Beregnung gering ausfällt, vorzugsweise der Farbabstand $\Delta E$ im Bereich von 0 bis 30 liegt, besonders bevorzugt der Farbabstand $\Delta E$ im Bereich von 0 bis 20 liegt. Auch in diesem Fall ist der Farbabstand $\Delta E$ eine dimensionslose Größe. Je kleiner der Wert, desto geringer ist der Farbabstand zu einem Ausgangswert. Ein Farbabstand $\Delta E = 0$ entspricht demnach keiner Änderung der Farbe, sondern einer gleichbleibenden Farbe.

Unter einem guten Alterungsverhalten in Form eines ausreichenden Erhalts der Schlagzähigkeit nach Heißluftalterung wird erfindungsgemäß verstanden, dass die Schlagzähigkeit gemessen nach **ISO180-1U** nach Heißluftalterung über 500 h bei 150°C nicht mehr als 30% im Vergleich zum Zeitpunkt bei 0 h abfällt.

Unter einem guten Alterungsverhalten in Form eines ausreichenden Erhalts der Bruchdehnung nach Heißluftalterung wird erfindungsgemäß verstanden, dass die Bruchdehnung gemessen nach **DIN EN ISO 527** nach Heißluftalterung über 500h bei 150°C nicht mehr als 30% im Vergleich zum Zeitpunkt bei 0 h abfällt.

Gegenstand der vorliegenden Erfindung sind **Zusammensetzungen** sowie darauf basierende **Erzeugnisse** enthaltend

a) wenigstens ein Polyamid, vorzugsweise Polyamid 6 oder Polyamid 66,

b) wenigstens ein sterisch gehindertes Phenol,

c) wenigstens ein Phosphinsäurederivat der allgemeinen Formel (I),

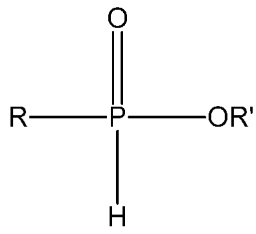

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$Alkylgruppe steht,

d) wenigstens ein 3-Thiopropionat, und

e) 4,4'-Bis(phenylisopropyl)diphenylamin

mit der Maßgabe, dass auf 100 Massenanteile der Komponente a)

0,03 bis 3 Massenanteile, bevorzugt 0,05 bis 1 Massenanteile der Komponente b),

0,05 bis 5 Massenanteile, bevorzugt 0,25 bis 1 Massenanteile, der Komponente c),

0,05 bis 5 Massenanteile, bevorzugt 0,2 bis 1 Massenanteile, der Komponente d) und 0,05 bis 5 Massenanteile, bevorzugt 0,1 bis 1 Massenanteile, der Komponente e) eingesetzt werden.

Das Ammonium-Ion $NH_4^+$ für R' in Formel (I) ist ein Kation, das mit Anionen ähnlich wie Alkalimetall-Ionen Salze bildet. Es ist die konjugierte Säure zur Base Ammoniak ($NH_3$).

Überraschenderweise zeigen erfindungsgemäße Polyamid basierte Erzeugnisse enthaltend neben dem Polyamid die Komponenten b), c), d) und e) eine höhere Schlagzähigkeit gemessen nach **ISO180-1U** im Vergleich zu nicht mit 4,4'-Bis(phenylisopropyl)diphenylamin modifizierten Polyamid basierten, aber die Komponenten b), c) und d) enthaltenden Erzeugnissen.

Gleichzeitig zeigt sich für erfindungsgemäße Erzeugnisse überraschenderweise neben einem guten Alterungsverhalten in Form eines verbesserten Farberhalts bzw. einer verbesserten Farbstabilität nach Heißluftalterung, auch ein gutes Alterungsverhalten in Form eines ausreichenden Erhalts der Schlagzähigkeit und der Bruchdehnung nach Heißluftalterung ebenfalls im Vergleich zu Polyamid basierten Erzeugnissen, die lediglich die Komponenten b), c) und d) enthalten. Gleichzeitig zeigen erfindungsgemäße Polyamid basierte Erzeugnisse eine verbesserte UV-Stabilität im Vergleich zu Zusammensetzungen die zwar die Komponenten b), c) und d), nicht aber 4,4'-Bis(phenylisopropyl) diphenylamin enthalten. Die vielseitigen Anforderungen an Polyamid basierte Erzeugnisse für Anwendungen in der E-Mobilität, aber auch in Haushaltsgeräten, werden somit durch den Einsatz der Komponenten b), c), d) und e) gleichzeitig erfüllt und zwar sowohl in unverstärkten, als auch in verstärkten, vorzugsweise glasfaserverstärkten Erzeugnissen.

Die Erfindung betrifft auch die **Verwendung** von 4,4'-Bis(phenylisopropyl)diphenylamin zum Erhalt der Schlagzähigkeit gemessen nach **ISO180-1U** und/oder der Bruchdehnung gemessen nach **ISO 527** nach Heißluftalterung über 500h bei 150°C und/oder zum Farberhalt berechnet gemäß **DIN EN ISO 11664-4** nach Heißluftlagerung über 500h bei 150°C und/oder zum Farberhalt berechnet gemäß **DIN EN ISO 11664-4** nach UV-Lagerung gemäß **DIN ISO 4892-2A** über 200h bei 80°C, 340 nm und 1,55 $W/m^2$ ohne Beregnung von Polyamid basierten Erzeugnissen.

Erfindungsgemäß liegt ein gutes Alterungsverhalten in Form eines Farberhalts bzw. einer Farbstabilität nach Heißluftalterung dann vor, wenn die Farbänderung $\Delta E$ kleiner ausfällt im Vergleich zu Polyamid basierten Erzeugnissen enthaltend die Komponenten b), c) und d) jedoch ohne die Komponente e), wobei der Farbabstand $\Delta E$ ist eine dimensionslose Größe ist und je kleiner der Wert, desto geringer ist der Farbabstand zu einem Ausgangswert ist, wobei ein Farbabstand $\Delta E = 0$ keiner Farbänderung, sondern einer gleichbleibenden Farbe entspricht. Vorzugsweise liegt die Farbänderung $\Delta E$ im Bereich von 0 bis 20, besonders bevorzugt im Bereich von 0 bis 15.

Die Erfindung betrifft ferner die **Verwendung** von Mischungen enthaltend

a) wenigstens ein Polyamid, vorzugsweise Polyamid 6 oder Polyamid 66,

b) wenigstens ein sterisch gehindertes Phenol,

c) wenigstens ein Phosphinsäurederivat der allgemeinen Formel (I),

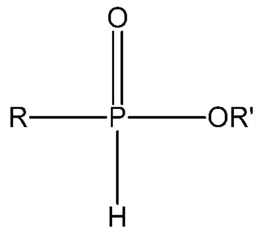

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) wenigstens ein 3-Thiopropionat, und

e) 4,4'-Bis(phenylisopropyl)diphenylamin (Antioxidant 445),

zur Herstellung Polyamid basierter Erzeugnisse, vorzugsweise zur Herstellung Polyamid basierter Erzeugnisse mit Erhalt der Schlagzähigkeit gemessen nach **ISO180-1U** und/oder Erhalt der Bruchdehnung gemessen nach **ISO 527** nach Heißluftalterung über 500h bei 150°C und/oder Farberhalt berechnet gemäß **DIN EN ISO 11664-4** nach Heißluftlagerung über 500h bei 150°C und/oder Farberhalt berechnet gemäß **DIN EN ISO 11664-4** nach UV-Lagerung gemäß **DIN ISO 4892-2A** über 200h bei 80°C, 340 nm und 1,55 W/$m^2$ ohne Beregnung mit der Maßgabe, dass auf 100 Massenanteile wenigstens eines als Komponente a) einzusetzenden Polyamids, vorzugsweise Polyamid 6 oder Polyamid 66,

0,03 bis 3 Massenanteile, bevorzugt 0,05 bis 1 Massenanteile, der Komponente b),

0,05 bis 5 Massenanteile, bevorzugt 0,25 bis 1 Massenanteile, der Komponente c),

0,05 bis 5 Massenanteile, bevorzugt 0,2 bis 1 Massenanteile der Komponente d) und

0,05 bis 5 Massenanteile, bevorzugt 0,1 bis 1 Massenanteile, der Komponente e) eingesetzt werden.

Die Erfindung betrifft auch ein **Verfahren** zum Erhalt der Schlagzähigkeit gemessen nach **ISO180-1U** und/oder zum Erhalt der Bruchdehnung gemessen nach ISO 527 nach Heißluftalterung über 500h bei 150°C und/oder zum Farberhalt berechnet gemäß DIN EN ISO 11664-4 nach Heißluftlagerung über 500h bei 150°C und/oder zum Farberhalt berechnet gemäß DIN EN ISO 11664-4 nach UV-Lagerung gemäß DIN ISO 4892-2A über 200h bei 80°C, 340 nm und 1,55 W/$m^2$ ohne Beregnung Polyamid basierter Erzeugnisse, indem man
0,05 bis 5 Massenanteile, bevorzugt 0,1 bis 1 Massenanteile, 4,4'-Bis(phenylisopropyl)diphenylamin als Komponente e) auf

a) 100 Massenanteile eines als Komponente a) einzusetzenden Polyamids

b) 0,03 bis 3 Massenanteile, bevorzugt 0,05 bis 1 Massenanteile wenigstens eines sterisch gehinderten Phenols,

c) 0,05 bis 5 Massenanteile, bevorzugt 0,25 bis 1 Massenanteile wenigstens eines Phosphinsäurederivats der allgemeinen Formel (I),

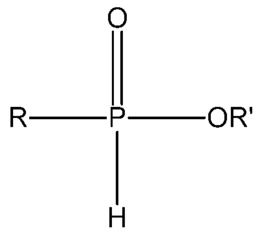

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) 0,05 bis 5 Massenanteile, bevorzugt 0,2 bis 1 Massenanteile wenigstens eines 3-Thiopropionats einsetzt.

Das im Rahmen der vorliegenden Erfindung in Formel (I) definierte Ammonium-Ion $NH_4^+$ für R' ist ein Kation, das mit Anionen ähnlich wie Alkalimetall-Ionen Salze bildet. Es ist die konjugierte Säure zur Base Ammoniak ($NH_3$).

Zur Klarstellung sei angemerkt, dass im Rahmen der vorliegenden Erfindung hinsichtlich der erfindungsgemäßen Zusammensetzungen, der erfindungsgemäßen Erzeugnisse, der erfindungsgemäßen Verwendungen und der erfindungsgemäßen Verfahren die Prüfung auf Schlagzähigkeit nach **ISO 180-1U** (Izod) sowie die Prüfung der Bruchdehnung nach **ISO 527** an spritzgegossenen nach **DIN EN ISO 1874-2** festgelegten Prüfkörpern im spritzfrischen Zustand bei 23°C durchgeführt wurde und durchzuführen ist, um die Werte vor einer Wärmealterung zu ermitteln. Der spritzfrische Zustand, auch "dry as moulded", wird in der **DIN EN ISO 1874-2** definiert.

Zur Klarstellung sei zudem angemerkt, dass im Rahmen der vorliegenden Erfindung die Prüfung des Alterungsverhaltens hinsichtlich der erfindungsgemäßen Zusammensetzungen, der erfindungsgemäßen Erzeugnisse, der erfindungsgemäßen Verwendungen und der erfindungsgemäßen Verfahren in Form eines Erhalts der Schlagzähigkeit durch Lagerung von spritzgegossenen nach **DIN EN ISO 1874-2** festgelegten Prüfkörpern in einem Materialprüfschrank des Modells Binder FP115 bei Umluft bei Temperaturen von 150°C über 500h erfolgte. Die Schlagzähigkeit wurde im Rahmen der vorliegenden Erfindung an den im Rahmen der vorliegenden Erfindung hergestellten Probekörpern deshalb sowohl vor (im spritzfrischem Zustand), als auch nach der Lagerung gemäß **ISO 180-1U** bei 23°C bestimmt und der Differenzwert ermittelt. Die Bruchdehnung wurde im Rahmen der vorliegenden Erfindung entsprechend an diesen Probekörpern sowohl vor (im spritzfrischem Zustand), als auch nach der Wärmealterung gemäß **ISO 527** bestimmt, um den prozentualen Erhalt zu ermitteln.

Der Lab-Farbraum (auch: CIELAB, CIEL*a*b*, Lab-Farben) beschreibt alle wahrnehmbaren Farben. Er nutzt einen dreidimensionalen Farbenraum, bei dem der Helligkeitswert L* senkrecht auf der Farbebene (a,b) steht. Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. In Analogie zur Gegenfarbtheorie von Ewald Hering gibt die a-Koordinate die Farbart und Farbintensität zwischen Grün und Rot an und die b-Koordinate die Farbart und die Farbintensität zwischen Blau und Gelb. Je größer positive a- und b- und je kleiner negative a- und b-Werte, umso intensiver der Farbton. Falls a=0 und b=0, liegt ein unbunter Farbton auf der Helligkeitsachse vor. In den üblichen Softwareumsetzungen kann L* Werte zwischen 0 und 100 annehmen und a und b können zwischen -128 und 127 variiert werden. Die Verfärbung von Polymer basierten Erzeugnisses durch die oxidative Schädigung der Polymermatrix kann durch die Messung des Farbabstands ΔE über die Lagerungszeit bei hoher Temperatur bestimmt werden. Der Farbabstand ΔE zwischen zwei Farbreizen wird nach der Gleichung $\Delta E = [(\Delta L^*)2+(\Delta a^*)2+(\Delta b^*)2]^{1/2}$ gemäß **DIN EN ISO 11664-4** berechnet. Wie bereits oben dargelegt ist der Farbabstand ΔE eine dimensionslose Größe. Je kleiner der Wert, desto geringer ist der Farbabstand zu einem Ausgangswert. Ein Farbabstand ΔE = 0 entspricht demnach keiner Änderung der Farbe, sondern einer gleichbleibenden Farbe.

Zur Klarstellung sei deshalb auch angemerkt, dass im Rahmen der vorliegenden Erfindung die Prüfung des Alterungsverhaltens hinsichtlich der erfindungsgemäßen Zusammensetzungen, der erfindungsgemäßen Erzeugnisse, der erfindungsgemäßen Verwendungen und der erfindungsgemäßen Verfahren in Form eines verbesserten Farberhalts / einer verbesserten Farbstabilität durch Lagerung von spritzgegossenen Platten von 60mm • 40mm • 4 mm in einem Materialprüfschrank des Modells Binder FP115 bei Umluft bei Temperaturen von 150°C, im folgenden Heißluftalterung genannt, erfolgt(e). Als Maß für die Verfärbung wird im Rahmen der vorliegenden Erfindung der Farbabstand ΔE von spritzgegossenen Erzeugnissen auf Basis erfindungsgemäßer Polymerzusammensetzungen vor und nach Heißluftalterung über die Messung der Farbwerte L*a*b* bestimmt.

$$\Delta E = [(\Delta L^*)^2+(\Delta a^*)^2+(\Delta b^*)^2]^{1/2}$$

Somit zeichnet sich erfindungsgemäß ein gutes Alterungsverhalten in Form eines verbesserten Farberhalts bzw. einer verbesserten Farbstabilität nach Heißluftalterung dadurch aus, dass die Farbänderung ΔE kleiner ausfällt im Vergleich zu Polyamid basierten Erzeugnissen enthaltend die Komponenten b), c) und d) jedoch ohne die Komponente e) und vorzugsweise im Bereich von 0 bis 20 liegt, besonders im Bereich von 0 bis 15 liegt. Die Farbwerte L*a*b* der Proben werden im Rahmen der vorliegenden Erfindung an Platten der Größe 60mm • 40mm • 4 mm bestimmt und daraus nach **DIN EN ISO 11664-4** der Farbabstand ΔE berechnet.

Zur Klarstellung sei auch angemerkt, dass im Rahmen der vorliegenden Erfindung die Prüfung des Alterungsverhaltens hinsichtlich der erfindungsgemäßen Zusammensetzungen, der erfindungsgemäßen Erzeugnisse, der erfindungsgemäßen Verwendungen und der erfindungsgemäßen Verfahren in Form einer verbesserten UV-Stabilität im Vergleich zu Polyamid basierten Erzeugnissen enthaltend die Komponenten b), c) und d) jedoch ohne die Komponente e) durch Lagerung von spritzgegossenen Platten von 60mm • 40mm • 4 mm in einem QUV Schnellbewitterungsgerät der Firma Q-Lab angelehnt an **DIN ISO 4892-2A** über 200h bei 80°C, 340 nm und 1,55 W/$m^2$ ohne Beregnung, im Folgenden abgekürzt als UV-Lagerung bezeichnet, erfolgt(e). Als Maß für die Verfärbung wird im Rahmen der vorliegenden Erfindung dann der Farbabstand ΔE von spritzgegossenen Erzeugnissen auf Basis erfindungsgemäßer Polymerzusammensetzungen vor und nach UV-Lagerung von 200 h durch die Messung der Farbwerte L*a*b* bestimmt. Wie bereits oben dargelegt ist der Farbabstand ΔE eine dimensionslose Größe. Je kleiner der Wert, desto geringer ist der Farbabstand zu einem Ausgangswert. Ein Farbabstand ΔE = 0 entspricht demnach keiner Änderung der Farbe, sondern einer gleichbleibenden Farbe.

$$\Delta E = [(\Delta L^*)^2+(\Delta a^*)^2+(\Delta b^*)^2]^{1/2}$$

Somit zeichnet sich erfindungsgemäß ein gutes Alterungsverhalten in Form einer verbesserten UV-Stabilität nach UV-Lagerung in einem QUV Schnellbewitterungsgerät dadurch aus, dass die Farbänderung ΔE in erfindungsgemäßen Erzeugnissen kleiner ausfällt, als im Vergleich zu Polyamid basierten Erzeugnissen enthaltend die Komponenten b), c) und d) jedoch ohne Komponente e) und der Farbabstand ΔE im Bereich von 0 bis 30 liegt, besonders bevorzugt im Bereich von 0 bis 20 liegt.

Die Farbwerte L*a*b* der Proben werden im Rahmen der vorliegenden Erfindung an Platten der Größe 60mm • 40mm • 4 mm bestimmt und daraus nach **DIN EN ISO 11664-4** der Farbabstand ΔE berechnet.

Zur Klarstellung sei auch angemerkt, dass vom Rahmen der vorliegenden Erfindung hinsichtlich der erfindungsgemäßen Zusammensetzungen, der erfindungsgemäßen Erzeugnisse, der erfindungsgemäßen Verwendungen und der erfindungsgemäßen Verfahren alle aufgeführten allgemeinen oder in Vorzugsbereichen genannten Definitionen und Parameter in beliebigen Kombinationen umfasst sind. Dies betrifft insbesondere auch die einzusetzenden Mengenangaben der einzelnen Komponenten in den im Rahmen der vorliegenden Anmeldung beanspruchten Verfahren und Verwendungen. Die im Rahmen dieser Anmeldung genannten Normen beziehen sich auf die zum Anmeldetag dieser Erfindung geltenden Fassung. Sofern nicht anders angegeben handelt es sich bei Prozentangaben um Gewichtsprozente.

Zur Klarstellung sei schließlich angemerkt, dass immer nur erfindungsgemäße unverstärkte Erzeugnisse mit unverstärkten Erzeugnissen basierend auf Zusammensetzungen des Stands der Technik verglichen werden können. Auch können nur verstärkte, vorzugsweise glasfaserverstärkte, erfindungsgemäße Erzeugnisse nur mit verstärkten, vorzugsweise glasfaserverstärkten, Erzeugnissen basierend auf Zusammensetzungen des Standes der Technik verglichen werden.

## Bevorzugte Ausführungsformen

In einer weiteren bevorzugten Ausführungsform betrifft die Erfindung **Zusammensetzungen** sowie **Polyamid basierte Erzeugnisse** enthaltend zusätzlich zu den Komponenten a), b), c), d) und e) noch f) wenigstens einen **Füllstoff oder Verstärkungsstoff** zu 5 bis 185 Massenanteilen, bevorzugt zu 5 bis 100 Massenanteilen, jeweils bezogen auf 100 Massenanteile der Komponente a).

In einer besonders bevorzugten Ausführungsform betrifft die Erfindung **Zusammensetzungen** sowie **Polyamid basierte Erzeugnisse** enthaltend zusätzlich zu den Komponenten a), b), c), d) und e) noch f) wenigstens Glasfasern als **Verstärkungsstoff** zu 5 bis 185 Massenanteilen, bevorzugt zu 5 bis 100 Massenanteilen, jeweils bezogen auf 100 Massenanteile der Komponente a).

In diesem Fall sind bevorzugter Gegenstand der vorliegenden Erfindung **Zusammensetzungen** sowie darauf basierende **Erzeugnisse** enthaltend

a) wenigstens ein Polyamid, vorzugsweise Polyamid 6 oder Polyamid 66,

b) wenigstens ein sterisch gehindertes Phenol,

c) wenigstens ein Phosphinsäurederivat der allgemeinen Formel (I),

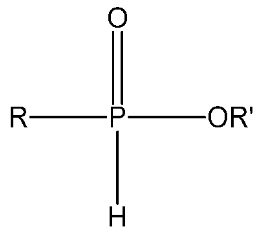

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,

d) wenigstens ein 3-Thiopropionat,

e) 4,4'-Bis(phenylisopropyl)diphenylamin (Antioxidant 445), und

f) wenigstens einen Füll- oder Verstärkungsstoff, vorzugsweise Glasfasern,

mit der Maßgabe, dass auf 100 Massenanteile der Komponente a)

0,03 bis 3 Massenanteile, bevorzugt 0,05 bis 1 Massenanteile der Komponente b),

0,05 bis 5 Massenanteile, bevorzugt 0,25 bis 1 Massenanteile, der Komponente c),

0,05 bis 5 Massenanteile, bevorzugt 0,2 bis 1 Massenanteile, der Komponente d),

0,05 bis 5 Massenanteile, bevorzugt 0,1 bis 1 Massenanteile, der Komponente e) und

5 bis 185 Massenanteile, bevorzugt 5 bis 100 Massenanteile, der Komponente f) eingesetzt werden.

Zur Klarstellung sei in diesem Fall angemerkt, dass vom Rahmen der vorliegenden Erfindung alle Füll- und Verstärkungsstoffe sowie die hier genannten Mengenangaben sowohl die erfindungsgemäßen Zusammensetzungen, als auch die daraus herzustellenden Polyamid basierten Erzeugnisse, insbesondere Polyamid basierte Erzeugnisse in Hochvoltanwendungen, im Automobilbereich oder im Haushaltsbereich betreffen, wie auch auf die erfindungsgemäßen Verwendungen und Verfahren anzuwenden sind.

Das Ammonium-Ion $NH_4^+$ für R' in Formel (I) ist ein Kation, das mit Anionen ähnlich wie Alkalimetall-Ionen Salze bildet. Es ist die konjugierte Säure zur Base Ammoniak ($NH_3$).

Die Erfindung betrifft deshalb zudem die **Verwendung** von Mischungen enthaltend

a) wenigstens ein Polyamid, vorzugsweise Polyamid 6 oder Polyamid 66,

b) wenigstens ein sterisch gehindertes Phenol,

c) wenigstens ein Phosphinsäurederivat der allgemeinen Formel (I),

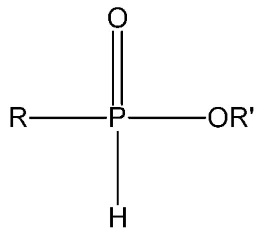

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,

d) wenigstens ein 3-Thiopropionat,

e) 4,4'-Bis(phenylisopropyl)diphenylamin (Antioxidant 445), und

f) wenigstens einen Füll- oder Verstärkungsstoff, vorzugsweise Glasfasern,

zur Herstellung Polyamid basierter Erzeugnisse, vorzugsweise zur Herstellung Polyamid basierter Erzeugnisse mit Erhalt der Schlagzähigkeit gemessen nach **ISO180-1U** und/oder Erhalt der Bruchdehnung gemessen nach **ISO 527** nach Heißluftalterung über 500h bei 150°C und/oder Farberhalt berechnet gemäß **DIN EN ISO 11664-4** nach Heißluftlagerung über 500h bei 150°C und/oder Farberhalt berechnet gemäß **DIN EN ISO 11664-4** nach UV-Lagerung gemäß **DIN ISO 4892-2A** über 200h bei 80°C, 340 nm und 1,55 W/$m^2$ ohne Beregnung mit der Maßgabe, dass auf

100 Massenanteile wenigstens eines als Komponente a) einzusetzenden Polyamids, vorzugsweise Polyamid 6 oder Polyamid 66,

0,03 bis 3 Massenanteile, bevorzugt 0,05 bis 1 Massenanteile, der Komponente b),

0,05 bis 5 Massenanteile, bevorzugt 0,25 bis 1 Massenanteile, der Komponente c),

0,05 bis 5 Massenanteile, bevorzugt 0,2 bis 1 Massenanteile, der Komponente d),

0,05 bis 5 Massenanteile, bevorzugt 0,1 bis 1 Massenanteile, der Komponente e) und

5 bis 185 Massenanteile, bevorzugt 5 bis 100 Massenanteile, der Komponente f) eingesetzt werden.

Das Ammonium-Ion $NH_4^+$ für R' ist ein Kation, das mit Anionen ähnlich wie Alkalimetall-Ionen Salze bildet. Es ist die konjugierte Säure zur Base Ammoniak ($NH_3$).

Die Erfindung betrifft ferner auch ein **Verfahren** zum Erhalt der Schlagzähigkeit gemessen nach ISO180-1U und/oder zum Erhalt der Bruchdehnung gemessen nach ISO 527 nach Heißluftalterung über 500h bei 150°C und/oder zum Farberhalt berechnet gemäß DIN EN ISO 11664-4 nach Heißluftlagerung über 500h bei 150°C und/oder zum Farberhalt berechnet gemäß DIN EN ISO 11664-4 nach UV-Lagerung gemäß DIN ISO 4892-2A über 200h bei 80°C, 340 nm und 1,55 W/$m^2$ ohne Beregnung Polyamid basierter Erzeugnisse, indem man

e) 0,05 bis 5 Massenanteile 4,4'-Bis(phenylisopropyl)diphenylamin als Komponente auf

a) 100 Massenanteile eines als Komponente a) einzusetzenden Polyamids,

b) 0,03 bis 3 Massenanteile wenigstens eines sterisch gehinderten Phenols,

c) 0,05 bis 5 Massenanteile wenigstens eines Phosphinsäurederivats der allgemeinen Formel (I),

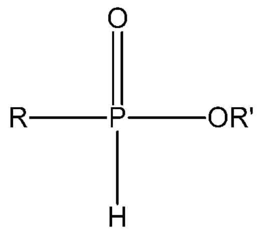

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) 0,05 bis 5 Massenanteile wenigstens eines 3-Thiopropionats und
5 bis 185 Massenanteile, bevorzugt 5 bis 100 Massenanteile, wenigstens eines Füll- oder Verstärkungsstoffs, vorzugsweise Glasfasern, als Komponente f) einsetzt.

Das Ammonium-Ion $NH_4^+$ für R' in Formel (I) ist ein Kation, das mit Anionen ähnlich wie Alkalimetall-Ionen Salze bildet. Es ist die konjugierte Säure zur Base Ammoniak ($NH_3$).

In einer weiteren Ausführungsform betrifft die Erfindung **Zusammensetzungen** sowie **Polyamid basierte Erzeugnisse** enthaltend zusätzlich zu den Komponenten a), b), c), d), e) und f) oder anstelle von f) noch wenigstens ein von den Komponenten b), c), d), e) und f) verschiedenes **Flammschutzmittel** g) zu 3 bis 100 Massenanteilen, bevorzugt zu 5 bis 80 Massenanteilen, besonders bevorzugt zu 10 bis 50 Massenanteilen, jeweils bezogen auf 100 Massenanteile der Komponente a).

Zur Klarstellung sei angemerkt, dass vom Rahmen der vorliegenden Erfindung alle als Komponente g) einzusetzenden Flammschutzmittel sowie die hier genannten Mengenangaben sowohl die Zusammensetzungen, als auch daraus herzustellende Polyamid basierte Erzeugnisse, insbesondere Polyamid basierte Erzeugnisse in Hochvoltanwendungen, betreffen, wie auch auf die erfindungsgemäßen Verwendungen und Verfahren anzuwenden sind.

In einer weiteren Ausführungsform betrifft die Erfindung **Zusammensetzungen** sowie **Polyamid basierte Erzeugnisse** enthaltend zusätzlich zu den Komponenten a), b), c), d), e) und f) oder anstelle von f) und/oder g) noch wenigstens ein von den Komponenten b), c), d), e), f) und g) verschiedenes **Additiv** h) zu 0,01 bis 80 Massenanteilen, bevorzugt zu 0,05 bis 50 Massenanteilen, besonders bevorzugt zu 0,1 bis 30 Massenanteilen, jeweils bezogen auf 100 Massenanteile der Komponente a).

Zur Klarstellung sei angemerkt, dass vom Rahmen der vorliegenden Erfindung alle als Komponente h) einzusetzenden Additive sowie die hier genannten Mengenangaben sowohl die Polyamid basierten Zusammensetzungen, als auch daraus herzustellende Polyamid basierte Erzeugnisse, insbesondere Polyamid basierte Erzeugnisse in Hochvoltanwendungen, betreffen, wie auch auf die erfindungsgemäßen Verwendungen und auf die erfindungsgemäßen Verfahren anzuwenden sind.

**Komponente a)**

Die erfindungsgemäß als Komponente a) einzusetzenden **Polyamide** können nach verschiedenen Verfahren hergestellt und aus unterschiedlichen Bausteinen synthetisiert werden. Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichts oder auch Monomere mit reaktiven Gruppen für später beabsichtigte Nachbehandlungen eingesetzt werden können.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Als Edukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bisaminomethylcyclohexan, Phenylendiamine, Xylylendiamine, Aminocarbonsäuren wie z.B. Aminocapronsäure, bzw. die entsprechenden Lactame in Betracht. Besonders bevorzugt werden Caprolactame, insbesondere ε-Caprolactam eingesetzt. Copolyamide aus mehreren der genannten Monomeren sind eingeschlossen.

Bevorzugte als Komponente a) einzusetzende Polyamide sind teilkristalline Polyamide, die ausgehend von

Diaminen und Dicarbonsäuren und/oder Lactamen mit wenigstens 5 Ringgliedern oder entsprechenden Aminosäuren hergestellt werden können.

Teilkristalline Polyamide, auch als semikristalline Polyamide bezeichnet, zeichnen sich gemäß DE 10 2011 084 519 A1 dadurch aus, dass die Schmelzenthalpie im Bereich von 4 bis 25 J/g, gemessen mit der DSC-Methode gemäß **ISO 11357** beim 2. Aufheizen und Integration des Schmelzpeaks, liegt.

Als besonders bevorzugte Polyamide werden Polyamid 6, Polyamid 66, Polyamid 46 und/oder teilaromatischen Copolyamide eingesetzt. Bevorzugte teilaromatische Copolyamide sind PA6T/6, PA6T/66, PA6T/61 oder PA6T/6I/66.

Die im Rahmen der vorliegenden Anmeldung benutzte Kennzeichnung der Polyamide entspricht der internationalen Norm **ISO 1874-1,** wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer $\alpha,\omega$- Aminocarbonsäure bzw. von dem davon abgeleiteten Lactam, im Falle des PA 6 also dem $\varepsilon$-Caprolactam, ausgegangen worden ist.

Das erfindungsgemäß bevorzugt als Komponente a) einzusetzende PA6 [CAS Nr. 25038-54-4] hat vorzugsweise eine nach **ISO 307** in 0,5 gew.-%iger Lösung in 96 gew.-%iger Schwefelsäure bei 25°C zu bestimmende Viskositätszahl im Bereich von 80 bis 180 ml/g, besonders bevorzugt im Bereich von 85 bis 170 ml/g und ganz besonders bevorzugt im Bereich von 90 bis 160 ml/g. Erfindungsgemäß bevorzugt als Komponente a) einzusetzendes Polyamid 6 ist beispielsweise als Durethan® B29 bei der Lanxess Deutschland GmbH, Köln erhältlich.

Bevorzugt weist ein als Komponente a) einzusetzendes Polyamid 66 [CAS Nr. 32131-17-2] eine nach **ISO 307** in 0,5 gew.-%iger Lösung in 96 gew.-%iger Schwefelsäure bei 25°C zu bestimmende Viskositätszahl im Bereich von 80 bis 180 ml/g auf, ganz besonders bevorzugt eine Viskositätszahl im Bereich von 85 bis 170 ml/g, insbesondere bevorzugt im Bereich von 90 bis 160 ml/g. Erfindungsgemäß als Komponente a) einzusetzendes Polyamid 66 ist beispielsweise als Ultramid® A27E01 bei der BASF SE, Ludwigshafen, erhältlich.

Das erfindungsgemäß als Komponente a) einzusetzende Polyamid kann auch im Gemisch mit wenigstens einem anderen Polyamid, als Copolyamid, und/oder wenigstens einem anderen Polymer eingesetzt werden, mit der Maßgabe, dass das weitere eingesetzte Polymer die Verfärbung nach Langzeitlagerung in Heißluft bei bis zu 150°C nicht negativ beeinflusst. Im Falle des Einsatzes wenigstens eines weiteren Polyamids oder wenigstens eines anderen Polymers erfolgt dieser vorzugsweise oder gegebenenfalls unter Einsatz wenigstens eines Kompatibilisators.

Dem als Komponente a) einzusetzenden Polyamid können übliche Additive, vorzugsweise dem Fachmann bekannte Entformungsmittel, Stabilisatoren und/oder Fließhilfsmittel, bereits in der Schmelze zugemischt werden.

**Komponente b)**

Erfindungsgemäß als Komponente b) einzusetzende **sterisch gehinderte Phenole** sind Verbindungen mit phenolischer Struktur, die am phenolischen Ring in unmittelbarerer Nachbarschaft zur phenolischen OH-Gruppe wenigstens eine sterisch anspruchsvolle Gruppe in Form einer tert.-Butylgruppe aufweisen. Gemäß **"http://de.wikipedia.org/wiki/Sterische_Hinderung"** bezeichnet eine sterische Hinderung in der organischen Chemie den Einfluss der räumlichen Ausdehnung eines Moleküls auf den Verlauf einer Reaktion. Der Begriff wurde erstmals 1894 von Victor Meyer für die Beobachtung geprägt, dass manche Reaktionen nur sehr langsam oder gar nicht ablaufen, wenn sich in der Umgebung der reagierenden Atome große und raumerfüllende Gruppen befinden. Ein bekanntes Beispiel für den Einfluss der sterischen Hinderung oder einer sterisch anspruchsvollen Gruppe ist die Anwesenheit von sehr raumerfüllenden *tert*-butyl-Gruppen.

Bevorzugt sind sterisch gehinderte Phenole der allgemeinen Formel (II),

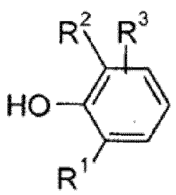

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht.

Besonders bevorzugt sind Phenole der allgemeinen Formel (II),

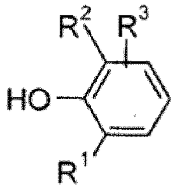

(II)

worin $R^1$ und $R^2$ jeweils für eine tert-Butylgruppe stehen und $R^3$ für eine Alkylgruppe, für eine substituierte Alkylgruppe, für eine Alkoxygruppe oder für eine substituierte Aminogruppe steht.

Bevorzugte sterisch gehinderte Phenole sind auch Verbindungen der Formel (II),

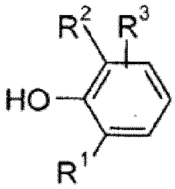

(II)

worin $R^1$ für eine Methylgruppe steht und $R^2$ für eine substituierte Alkylgruppe und $R^3$ für eine Alkylgruppe, für eine substituierte Alkylgruppe, für eine Alkoxygruppe oder für eine substituierte Aminogruppe steht.

Besonders bevorzugte sterisch gehinderte Phenole sind auch Verbindungen der Formel (II),

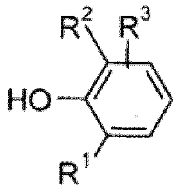

(II)

worin $R^1$ für eine Methylgruppe steht und $R^2$ für eine tert-Butylgruppe steht und $R^3$ für eine Alkylgruppe, für eine substituierte Alkylgruppe, für eine Alkoxygruppe oder für eine substituierte Aminogruppe steht.

Bevorzugte Phenole der Formel (II) werden in der DE-A 27 02 661 beschrieben, deren Inhalt von der vorliegenden Anmeldung vollumfänglich umfasst wird.

Eine weitere Gruppe bevorzugt als Komponente b) einzusetzender sterisch gehinderter Phenole leitet sich von substituierten Benzolcarbonsäuren ab, insbesondere von substituierten Benzolpropionsäuren. Besonders bevorzugte Verbindungen aus dieser Klasse sind Verbindungen der Formel (III)

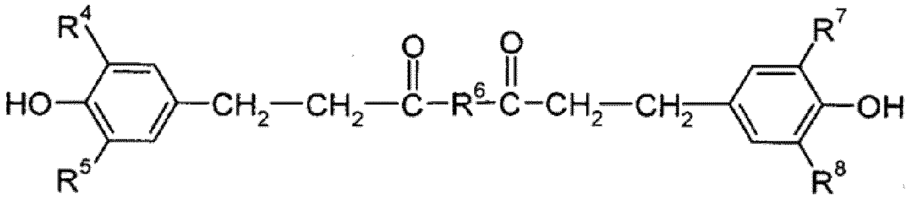

(III)

worin $R^4$, $R^5$, $R^7$ und $R^8$ unabhängig voneinander $C_1$-$C_8$-Alkylgruppen darstellen, die ihrerseits substituiert sein können und wovon mindestens eine davon eine sterisch anspruchsvolle Gruppe ist, und $R^6$ ein verbrückendes Diamin, bevorzugt Ethylendiamin oder Hexamethylendiamin, ein Diol, bevorzugt Glycol, Hexandiol oder ein Ethylenglycololigomer darstellt.

Bevorzugt werden symmetrische Verbindungen der Formel (III) eingesetzt in denen $R^4 = R^7$ und $R^5 = R^8$ gilt, wobei mindestens $R^4$ und $R^7$ sterisch anspruchsvolle Gruppen sind und $R^6$ ein verbrückendes Diamin, bevorzugt Ethylendiamin oder Hexamethylendiamin, ein Diol, bevorzugt Glycol, Hexandiol oder ein Ethylenglycololigomer darstellt.

Besonders bevorzugt werden symmetrische Verbindungen der Formel (III) eingesetzt in denen $R^4 = R^7$ und $R^5 = R^8$ gilt, wobei $R^4$ und $R^7$ sterisch anspruchsvolle Gruppen sind und $R^5$ und $R^8$ Methylgruppen sind und $R^6$ ein verbrückendes Diamin, bevorzugt Ethylendiamin oder Hexamethylendiamin, ein Diol, bevorzugt Glycol, Hexandiol oder ein Ethylenglycololigomer darstellt.

Ganz besonders bevorzugt werden symmetrische Verbindungen der Formel (III) eingesetzt in denen $R^4$ und $R^7$ tert-Butyl Gruppen sind und $R^5$ und $R^8$ Methylgruppen sind und $R^6$ ein verbrückendes Diamin, bevorzugt Ethylendiamin oder Hexamethylendiamin, ein Diol, bevorzugt Glycol, Hexandiol oder ein Ethylenglycololigomer darstellt.

Besonders bevorzugte als Komponente b) einzusetzende Verbindungen sind solche der allgemeinen Formel (IV)

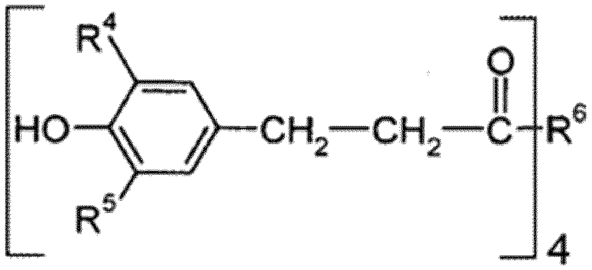

(IV)

worin $R^4$, $R^5$ unabhängig voneinander $C_1$-$C_8$-Alkylgruppen darstellen, die ihrerseits substituiert sein können und wovon mindestens eine davon eine sterisch anspruchsvolle Gruppe ist und $R^6$ für ein verbrückendes Tetraalkoholderivat, bevorzugt Pentraerythrytol, Pentaerythrytolderivat, oder für ein Tetraamin steht. Bevorzugt werden Verbindungen der Formel (IV) eingesetzt in denen $R^4$ = Methyl und $R^5$ = ter.-Butyl und $R^6$ für ein verbrückendes Tetraalkohol, bevorzugt Pentraerythrytol, oder Pentaerythrytolderivate, oder ein Tetraamin steht.

Ganz besonders bevorzugte als Komponente b) einzusetzende Verbindungen sind solche der allgemeinen Formel (V)

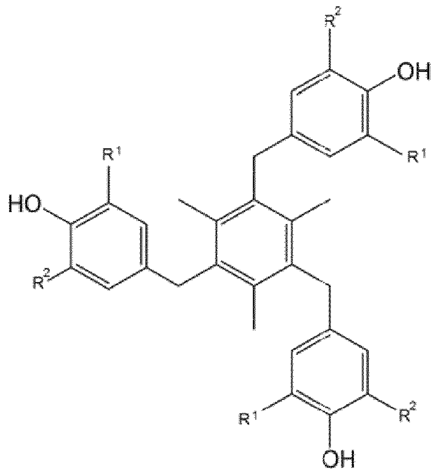

(V)

worin $R^1$ und $R^2$ unabhängig voneinander für $C_1$-$C_8$-Alkylgruppen stehen, die ihrerseits substituiert sein können und wovon mindestens eine davon eine sterisch anspruchsvolle Gruppe ist. Insbesondere bevorzugt sind Verbindungen der allgemeinen Formel (V) worin $R^1$ für Methyl und $R^2$ = für tert.-Butyl steht.

Insbesondere bevorzugte Verbindungen der Formel (II) sind Verbindungen der Reihe

Triethylenglycol-bis(3-tert-butyl-4-hydroxy-5-methylphenyl)propionat (Irganox® 245 der BASF SE, [CAS No. 36443-68-2]);

Hexamethylen-bis[3-(3,5-di-tert-butyl-4-hydroxyphenyl)propionat] (Irganox® 259 der BASF SE, [CAS No. 35074-77-2]);

N,N'-1,6-hexanediylbis[3,5-bis(1,1-dimethylethyl)-4-hydroxyphenylpropanamid] (Irganox® 1098 der BASF SE, [CAS No. 23128-74-7]):

3,9-Bis[2-[3-(3-tert-butyl-4-hydroxy-5-methylphenyl)-propionyloxy]-1,1-dimethylethyl]-2,4,8,10-tetraoxaspiro-[5.5]-undecan (Sumilizer® GA-80 der Sumitomo Chemical Co. Ltd., [CAS No. 90498-90-1]);

Tetrakis[methylen-3-(3,5-di-tert-butyl-4-hydroxyphenyl)propionate]methan (Songnox® 1010 der Songwon Industrial Group, [CAS No. 6683-19-8]);

Thiodiethylen-bis[3-(3,5-di-tert-butyl-4-hydroxyphenyl)propionat] (Songnox® 1035 der Songwon Industrial Group [CAS No. 41484-35-9]);

1,3,5-Trimethyl-2,4,6-tris(3,5-di-tert-butyl-4-hydroxybenzyl)benzen (Songnox® 1330 der Songwon Industrial Group [CAS No. 1709-70-2]);

1,2-Bis(3,5-di-tert-butyl-4-hydroxyhydrocinnamoly)hydrazin (Songnox® 1024 der Songwon Industrial Group [CAS No. 32687-78-8]);

Ganz besonders bevorzugte als Komponente b) einzusetzende sterisch gehinderte Phenole werden ausgewählt aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-proprionat], 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin.

Erfindungsgemäß insbesondere ganz besonders bevorzugt wird als Komponente b) 3,9-bis(2-(3-(3-tert-butyl-4-hydroxy-5-methylphenyl)propionyloxy-1,1-dimethylethyl)-2,4,8,10-tetraoxaspiro[5.5]undecane, [CAS No. 90498-90-1 ], eingesetzt, das als Sumilzer® GA80 bei der Sumitomo Chemical Co., Ltd. erhältlich ist.

**Komponente c)**

Als Komponente c) wird wenigstens ein Phosphinsäurederivat der allgemeinen Formel (I) eingesetzt

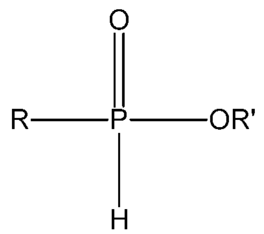

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$Alkylgruppe steht.

Wenn R ein Wasserstoffatom darstellt handelt es sich um Hypophosphorsäure, wenn R eine Alkyl-, Cycloalkyl- oder Aryl-Gruppe darstellt, handelt es sich um eine Phosphinsäure, wobei die Alkyl-, Cycloalkyl- oder Aryl-Gruppe vorzugsweise bis zu 12 Kohlenstoffatome umfasst.

Wenn R eine Alkyl-, Cycloalkyl- oder Aryl-Gruppe darstellt werden bevorzugt Salze und Ester der Phoshinsäure eingesetzt. Bevorzugt werden Salze der Phosphinsäure eingesetzt, wobei es sich auch um Hydrate der Salze handeln kann. Ganz besonders bevorzugt sind Alkali-, Erdalkalimetallsalze sowie Metallsalze der 12. oder 13. Gruppe des Periodensystems der Phosphinsäure, wobei es sich auch um Hydrate der Salze handeln kann.

Wenn R ein Wasserstoffatom ist handelt es sich um Hypophosphorsäure. Bevorzugt werden Salze und Ester der Hypophosphorsäure eingesetzt. Besonders bevorzugt werden Alkali-, Erdalkalimetallsalze, Salze mit Ammonium Ion als Kation, sowie Metallsalze der 12. oder 13. Gruppe des Periodensystems der Hypophosphorsäure eingesetzt. Insbesondere bevorzugt werden Alkalimetallsalze der Hypophosphorsäure eingesetzt, wobei es sich auch um Hydrate der Salze handeln kann.

Das Ammonium-Ion $NH_4^+$ für R' in Formel (I) ist ein Kation, das mit Anionen ähnlich wie Alkalimetall-Ionen Salze bildet. Es ist die konjugierte Säure zur Base Ammoniak ($NH_3$).

Ganz besonders bevorzugt wird als Komponente c) Natriumhypophosphit [CAS No. 7681-53-0] oder Natriumhypophosphit Monohydrat [CAS No. 10039-56-2] eingesetzt. Natriumhypophosphit und Natriumhypophosphit Monohydrat sind kommerziell unter anderem bei der Firma Sigma Aldrich zu erwerben.

**Komponente d)**

Als Komponente d) werden vorzugsweise 3-Thiopropionate der allgemeinen Formel (VI) eingesetzt,

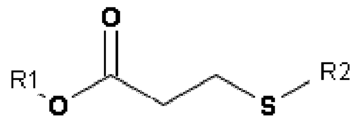

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht.

Bevorzugt werden als Komponente d) 3-Thiopropionate der allgemeinen Formel (VII) eigesetzt,

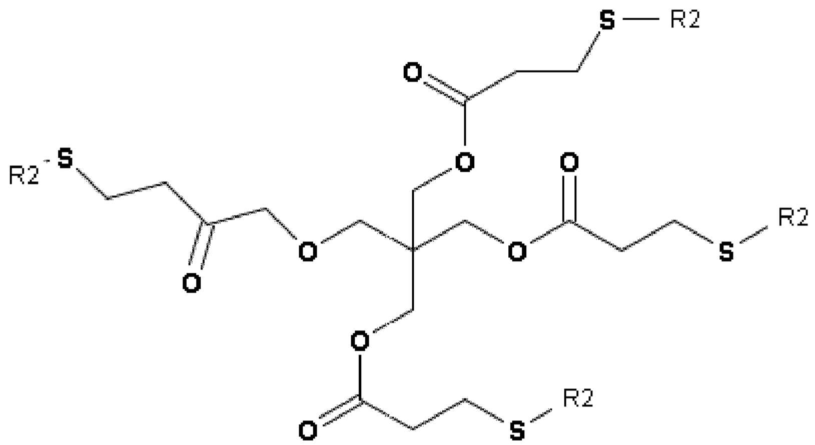

(VII)

worin R2 für einen Alkylrest mit 4 bis 20 Kohlenstoffatomen steht.

Erfindungsgemäß besonders bevorzugt wird als Komponente d) Pentaerythrityltetrakis(3-dodecylthiopropionat) mit der CAS No. 29598-76-3 und erhältlich bei der Firma Rialon Corporation, China, unter dem Handelsnamen Rianox® 412S eingesetzt.

**Komponente e)**

Als Komponente e) wird erfindungsgemäß das sekundäre Amin 4,4'-Bis(phenylisopropyl)diphenylamin (Antioxidant 445) mit der CAS No. 10081-67-1 der Formel (VIII) eingesetzt.

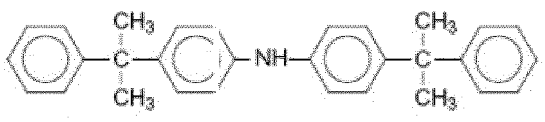

(VIII)

Kommerziell erhältlich ist Komponente e) unter anderem bei der Firma OKA-Tec GmbH unter dem Handelsnamen Okabest® AO445.

**Komponente f)**

Als Komponente f) wird wenigstens ein **Füllstoff oder Verstärkungsstoff** eingesetzt. Dabei können auch Mischungen aus zwei oder mehreren unterschiedlichen Füllstoffen oder Verstärkungsstoffen eingesetzt werden.

Vorzugsweise wird wenigstens ein Füll- oder Verstärkungsstoff aus der Gruppe Kohlenstofffasern [CAS No. 7440-44-0], Glaskugeln oder Voll- oder Hohlglaskugeln, Glasfasern, gemahlenes Glas, amorphes Quarzglas, Aluminium-Borsilikatglas mit einem Alkaligehalt 1% (E-Glas) [CAS No. 65997-17-3], amorphe Kieselsäure [CAS No. 7631-86-9], Quarzmehl [CAS No. 14808-60-7], Calciumsilicat [CAS No. 1344-95-2], Calciummetasilicat [CAS No. 10101-39-0], Magnesiumcarbonat [CAS No. 546-93-0], Kaolin [CAS No. 1332-58-7], calciniertes Kaolin [CAS No. 92704-41-1], Kreide [CAS No.1317-65-3], Kyanit [CAS No. 1302-76-7], gepulverter oder gemahlener Quarz [CAS No. 14808-60-7], Glimmer [CAS No. 1318-94-1], Phlogopit [CAS No. 12251-00-2], Bariumsulfat [CAS No. 7727-43-7], Feldspat [CAS No. 68476-25-5], Wollastonit [CAS No. 13983-17-0], Montmorillonit [CAS No. 67479-91-8], Pseudoböhmit der Formel AlO(OH), Magnesiumcarbonat [CAS No. 12125-28-9] und Talkum [CAS No. 14807-96-6] eingesetzt.

Unter den faserförmigen Füllstoffen oder Verstärkungsstoffen sind Glasfasern und Wollastonit besonders bevorzugt, wobei Glasfasern ganz besonders bevorzugt sind. Es können auch Kohlenstofffasern als Füllstoff oder Verstärkungsstoff eingesetzt werden.

Bezüglich der Glasfasern unterscheidet der Fachmann gemäß **"http://de.wikipedia.org/wiki/Faser-Kunststoff-Verbund"** geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden vorzugsweise in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 μm liegt.

Erfindungsgemäß bevorzugt als Komponente f) einzusetzende Glasfasern sind geschnittene Langglasfasern mit einer vor Einarbeitung in Formmassen mittels Laserdiffraktometrie gemäß **ISO 13320** zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm. Zu Laserbeugungs-Partikelgrößenbestimmung/Laserdiffraktometrie gemäß der Norm **ISO 13320** siehe: **https://de.wikipedia.org/wiki/Laserbeugungs-Partikelgr%C3%B6%C3%9Fenanalyse** Bevorzugte, als Komponente f) einzusetzende Glasfasern haben einen mittels Laserdiffraktometrie gemäß **ISO 13320** zu bestimmenden mittleren Faserdurchmesser im Bereich von 7 bis 18 μm, besonders bevorzugt im Bereich von 9 bis 15 μm.

Die als Komponente f) einzusetzenden Füllstoffe, vorzugsweise Glasfasern, werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt. Besonders bevorzugte Haftvermittler auf Silanbasis für die Behandlung der Komponente e), insbesondere für die Behandlung von Glasfasern, sind Silanverbindungen der allgemeinen Formel (IX)

$$(X\text{-}(CH_2)_q)_k\text{-}Si\text{-}(O\text{-}CrH_{2r+1})_{4-k} \qquad \text{(IX)}$$

worin

X für $NH_2$-, Carboxyl-, HO- oder steht,

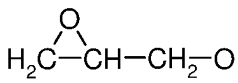

q in Formel (IX) für eine ganze Zahl von 2 bis 10, bevorzugt 3 bis 4 steht,

r in Formel (IX) für eine ganze Zahl von 1 bis 5, bevorzugt 1 bis 2 steht und

k in Formel (IX) für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X in Formel (IX) eine Glycidyl- oder eine Carboxylgruppe enthalten, wobei Carboxylgruppen insbesondere ganz besonders bevorzugt sind.

Für die Ausrüstung der als Komponente f) einzusetzenden Füllstoffe, vorzugsweise Glasfasern, wird der Haftvermittler, bevorzugt die Silanverbindungen gemäß Formel (IX), bevorzugt in Mengen im Bereich von 0,05 bis 2 Gew.-%, besonders bevorzugt in Mengen im Bereich von 0,25 bis 1,5 Gew.-% und ganz besonders bevorzugt in Mengen im Bereich von 0,5 bis 1 Gew.-%, jeweils bezogen auf 100 Gew.-% Komponente f), eingesetzt.

Die als Komponente f) vorzugsweise einzusetzenden Glasfasern können bedingt durch die Verarbeitung zur Zusammensetzung bzw. zum Erzeugnis in der Zusammensetzung bzw. im Erzeugnis kürzer sein, als die ursprünglich eingesetzten Glasfasern. So liegt der mittels hochauflösender Röntgencomputertomographie zu bestimmende arithmetische Mittelwert der Glasfaserlänge nach der Verarbeitung häufig nur noch im Bereich von 150 $\mu$m bis 300 $\mu$m.

Gemäß **"http://www.r-g.de/wiki/Glasfasern"** werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:

- E-Glas, das meistverwendete Material mit optimalem Preis-Leistungsverhältnis (E-Glas von R&G)
- H-Glas, Hohlglasfasern für reduziertes Gewicht (R&G Glashohlfasergewebe 160 g/m$^2$ und 216 g/m$^2$)
- R, S-Glas, für erhöhte mechanische Anforderungen (S2-Glas von R&G)
- D-Glas, Borsilicatglas für erhöhte elektrische Anforderungen
- C-Glas, mit erhöhter chemischer Widerstandsfähigkeit
- Quarzglas, mit hoher Temperaturbeständigkeit

Weitere Beispiele finden sich unter **"http:/de.wikipedia.org/wiki/Glasfaser".** Für die Kunststoffverstärkung haben E-Glasfasern die größte Bedeutung erlangt. E steht für Elektro-Glas, da es ursprünglich vor allem in der Elektroindustrie eingesetzt wurde. Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z.B. Alu-Legierungen), wobei das spezifische Gewicht von E-Glasfasern enthaltenden Laminaten niedriger ist, als das der Metalle. E-Glasfasern sind unbrennbar, hitzefest bis ca. 400°C und beständig gegen die meisten Chemikalien und Witterungseinflüsse.

Bevorzugt werden als Komponente f) ferner auch nadelförmige mineralische Füllstoffe eingesetzt. Unter nadelförmigen, mineralischen Füllstoffen wird erfindungsgemäß ein mineralischer Füllstoff mit stark ausgeprägtem nadelförmigen Charakter verstanden. Bevorzugt als Komponente f) einzusetzender nadelförmiger mineralischer Füllstoff ist Wollastonit. Bevorzugt weist der nadelförmige, mineralische Füllstoff ein mittels hochauflösender Röntgencomputertomographie zu bestimmendes Länge : Durchmesser - Verhältnis L/D im Bereich von 2:1 bis 35:1, besonders bevorzugt im Bereich von 3:1 bis 19:1, insbesondere bevorzugt im Bereich von 4:1 bis 12:1 auf. Die mittels hochauflösender Röntgencomputertomographie zu bestimmende mittlere Teilchengröße der nadelförmigen, mineralischen Füllstoffe liegt bevorzugt bei kleiner 20 $\mu$m, besonders bevorzugt bei kleiner 15 $\mu$m, insbesondere bevorzugt bei kleiner 10 $\mu$m.

Bevorzugt wird als Komponente f) aber auch nicht-faserförmiges und nicht-geschäumtes gemahlenes Glas mit einer mittels Laserdiffraktometrie gemäß **ISO 13320** zu bestimmenden Teilchengrößenverteilung mit einem d90 im Bereich von 5 bis 250 $\mu$m eingesetzt, bevorzugt mit einem d90 im Bereich von 10 bis 150 $\mu$m, besonders bevorzugt mit einem d90 im Bereich von 15 bis 80 $\mu$m, ganz besonders bevorzugt mit einem d90 im Bereich von 16 bis 25 $\mu$m. Bezüglich der d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d90-Wert diejenige Partikelgröße ist, unterhalb derer 90 % der Partikelmenge liegen.

Erfindungsgemäß bevorzugt ist das nicht-faserförmige und nicht-geschäumte gemahlene Glas von partikelförmiger, nicht zylindrischer Gestalt und hat vor Verarbeitung zu Formmassen ein mittels Laserdiffraktometrie gemäß **ISO 13320** zu bestimmendes Längenzu Durchmesserverhältnis L/D kleiner 5, bevorzugt kleiner als 3, besonders bevorzugt kleiner 2. Der Wert Null ist selbstverständlich ausgeschlossen.

Das in einer Ausführungsform als Komponente f) besonders bevorzugt einzusetzende nicht-geschäumte und nicht faserförmige gemahlene Glas ist zudem dadurch gekennzeichnet, dass es nicht die für faserförmiges Glas typische

Glasgeometrie mit zylindrischem oder ovalen Querschnitt mit einem vor Verarbeitung zu Formmassen mittels Laserdiffraktometrie gemäß **ISO 13320** zu bestimmenden Längen- zu Durchmesserverhältnis (L/D-Verhältnis) größer 5 aufweist.

Das in einer Ausführungsform erfindungsgemäß als Komponente f) besonders bevorzugt einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Bevorzugte Edukte für die Vermahlung des in einer Ausführungsform als Komponente f) einzusetzenden nichtfaserförmigem und nicht-geschäumten, gemahlenen Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nichtgefärbtes Glas als Ausgangsmaterial zum Einsatz als Komponente f) bevorzugt ist.

**Komponente g)**

In bevorzugter Ausführungsform wird als Komponente g) wenigstens ein Flammschutzmittel eingesetzt. Bevorzugte **Flammschutzmittel** sind verschiedene mineralische Flammschutzmittel, stickstoffhaltige Flammschutzmittel oder phosphorhaltige Flammschutzmittel.

Unter den als Komponente g) einzusetzenden mineralischen Flammschutzmitteln ist Magnesiumhydroxid besonders bevorzugt. Magnesiumhydroxid [CAS No. 1309-42-8] kann aufgrund seiner Herkunft und Herstellungsweise verunreinigt sein. Typische Verunreinigungen sind z.B. Silicium-, Eisen-, Calcium- und/oder Aluminium-haltige Spezies, die beispielsweise in Form von Oxiden in den Magnesiumhydroxid-Kristallen eingelagert sein können. Das als mineralisches Flammschutzmittel einzusetzende Magnesiumhydroxid kann unbeschlichtet oder aber mit einer Schlichte versehen sein. Eine Schlichte fördert qualitätsbeeinflussend den mechanischen Verbund zwischen Kunststoff(matrix) und der mit Schlichte zu versehenden Komponente. Vorzugsweise wird das als mineralisches Flammschutzmittel vorzugsweise einzusetzende Magnesiumhydroxid mit Schlichten auf Basis von Stearaten oder Aminosiloxanen, besonders bevorzugt mit Aminosiloxanen versehen. Vorzugsweise als mineralisches Flammschutzmittel einzusetzendes Magnesiumhydroxid hat eine vor Verarbeitung zur Formmasse mittels Laserdiffraktometrie gemäß **ISO 13320** zu bestimmende mittlere Teilchengröße d50 im Bereich von 0,5 μm bis 6 μm, wobei ein d50 im Bereich von 0,7 μm bis 3,8 μm bevorzugt und ein d50 im Bereich von 1,0 μm bis 2,6 μm besonders bevorzugt ist.

Erfindungsgemäß bevorzugte mineralische Flammschutzmittel sind Magnesiumhydroxidtypen, insbesondere Magnifin® H5IV der Martinswerk GmbH, Bergheim, Deutschland oder Hidromag® Q2015 TC der Firma Penoles, Mexiko-Stadt, Mexico.

Bevorzugte, als Komponente g) einzusetzende stickstoffhaltige Flammschutzmittel sind die Reaktionsprodukte aus Trichlortriazin, Piperazin und Morpholin gemäß CAS No. 1078142-02-5, insbesondere MCA PPM Triazin HF der Fa. MCA Technologies GmbH, Biel-Benken, Schweiz, ferner Melamincyanurat und Kondensationsprodukte des Melamins, insbesondere Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive, insbesondere Aluminiumhydroxid oder Ca-Mg-Carbonat-Hydrate **(**DE-A 4 236 122**)** eingesetzt werden.

In Frage kommen für den Einsatz als Komponente g) ferner Flammschutzmittelsynergisten aus der Gruppe der sauerstoff- stickstoff- oder schwefelhaltigen Metallverbindungen. Bevorzugt sind dabei zinkfreie Verbindungen, insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen.

In einer alternativen Ausführungsform können als Komponente g) aber auch - sofern es der Bedarf erfordert - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

Bevorzugte, als Komponente g) einzusetzende phosphorhaltige Flammschutzmittel sind organische Metallphosphinate, Aluminiumsalze der Phosphonsäure, roter Phosphor, anorganische Metallhypophosphite, Metallphosphonate, Derivate der 9,10-Dihydro-9-oxa-10-phosphaphenanthren-10-oxide (DOPO-Derivate), Resorcinol-bis-(diphenylphosphat) (RDP) einschließlich Oligomere, Bisphenol-A-bis-diphenylphosphat (BDP) einschließlich Oligomere, Melaminpyrophosphat, Melaminpolyphosphat, Melamin-poly(aluminiumphosphat), Melamin-poly(zinkphosphat) oder Phenoxyphosphazenoligomere und deren Mischungen.

Ein bevorzugtes organisches Metallphosphinat ist Aluminium-tris(diethylphosphinat). Ein bevorzugtes anorganisches Metallhypophosphit ist Aluminiumhypophosphit.

Weitere als Komponente g) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die als Komponente g) einzusetzenden Flammschutzmittel können in Reinform, sowie über Masterbatche oder Kompaktate der Komponente a) zugesetzt werden.

In einer alternativen Ausführungsform können als Komponente g) Flammschutzmittel aber auch - sofern der Bedarf es erfordert unter Berücksichtigung der Nachteile durch den

Verlust der Halogenfreiheit der Flammschutzmittel - halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten eingesetzt werden können, wobei unter den halogenhaltigen Flammschutzmitteln bromiertes Polystyrol besonders bevorzugt ist. Bromiertes Polystyrol wird dabei bevorzugt zu 10 - 30 Gew.-%, besonders bevorzugt zu 15 - 25 Gew.% eingesetzt, jeweils bezogen auf die Gesamtzusammensetzung, wobei wenigstens eine der übrigen Komponenten soweit reduziert wird, dass die Summe aller Gewichtsprozente stets 100 ergibt.

In einer weiteren alternativen Ausführungsform können als Flammschutzmittelsynergisten aber auch - sofern der Bedarf es erfordert und unter Berücksichtigung hinsichtlich einer Gefahrenklassifizierung nach H351 - auch Antimontrioxid und Antimonpentoxid eingesetzt werden.

Bromiertes Polystyrol ist in diversen Produktqualitäten kommerziell verfügbar. Beispiele hierfür sind z.B. Firemaster® PBS64 der Fa. Lanxess, Köln, Deutschland sowie Saytex® HP-3010 der Fa. Albemarle, Baton Rouge, USA.

Unter den als Komponente g) einzusetzenden Flammschutzmitteln sind Aluminium-tris(diethylphosphinat)] [CAS No. 225789-38-8] sowie die Kombination aus Aluminium-tris(diethylphosphinat) und Melaminpolyphosphat oder die Kombination aus Aluminium-tris(diethylphosphinat) und mindestens einem Aluminiumsalz der Phosphonsäure ganz besonders bevorzugt, wobei letztere Kombination insbesondere bevorzugt ist.

Im Falle der Kombinationen aus Aluminium-tris(diethylphosphinat) und Melaminpolyphosphat bzw. aus Aluminium-tris(diethylphosphinat) und mindestens einem Aluminiumsalz der Phosphonsäure liegt der Anteil an Aluminium-tris(diethylphosphinat) bevorzugt im Bereich von 40 bis 90 Massenanteilen, besonders bevorzugt im Bereich von 50 bis 80 Massenanteilen, ganz besonders bevorzugt im Bereich von 60 bis 70 Massenanteilen, jeweils bezogen auf 100 Massenanteile der Kombination aus Aluminium-tris(diethylphosphinat) und Melaminpolyphosphat bzw. der Kombination aus Aluminium-tris(diethylphosphinat) und mindestens einem Aluminiumsalz der Phosphonsäure.

Das als Komponente g) insbesondere bevorzugt einzusetzende Aluminium-tris(diethylphosphinat) ist dem Fachmann als Exolit® OP1230 oder Exolit® OP1240 der Fa. Clariant International Ltd. Muttenz, Schweiz, bekannt. Melaminpolyphosphat ist in diversen Produktqualitäten kommerziell verfügbar. Beispiele hierfür sind z.B. Melapur® 200/70 der Fa. BASF, Ludwigshafen, Deutschland sowie Budit® 3141 der Fa. Budenheim, Budenheim, Deutschland.

Bevorzugte, als Komponente g) einzusetzende Aluminiumsalze der Phosphonsäure sind auszuwählen aus der Gruppe

primäres Aluminiumphosphonat $[Al(H_2PO_3)_3]$,

basisches Aluminiumphosphonat $[Al(OH)H_2PO_3)_2 \cdot 2H_2O]$,

$Al_2(HPO_3)_3 \cdot x\ Al_2O_3 \cdot nH_2O$ mit x im Bereich von 2,27 bis 1 und n im Bereich von 0 bis 4,

$Al_2(HPO_3)_3 \cdot (H_2O)_q$ der Formel (X) mit q im Bereich von 0 bis 4, insbesondere Aluminiumphosphonattetrahydrat $[Al_2(HPO_3)_3 \cdot 4H_2O]$ oder sekundäres Aluminiumphosphonat $[Al_2(HPO_3)_3]$,

$Al_2M_z(HPO_3)_y(OH)_v \cdot (H_2O)_w$ der Formel (XI) worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und

$Al_2(HPO_3)_u(H_2PO_3)_t \cdot (H_2O)_s$ der Formel (XII), worin u im Bereich von 2 bis 2,99, t im Bereich von 2 bis 0,01 und s im Bereich von 0 bis 4 liegt,

wobei in Formel (XI) z, y und v sowie in Formel (XII) u und t nur solche Zahlen annehmen können, dass das entsprechende Aluminiumsalz der Phosphonsäure als Ganzes ungeladen ist.

Bevorzugte Alkalimetalle M in Formel (XI) sind Natrium und Kalium.

Die beschriebenen Aluminiumsalze der Phosphonsäure können dabei einzeln oder im Gemisch eingesetzt werden.

Besonders bevorzugte als Komponente g) einzusetzende Aluminiumsalze der Phosphonsäure werden ausgewählt aus der Gruppe

primäres Aluminiumphosphonat $[Al(H_2PO_3)_3]$,

sekundäres Aluminiumphosphonat $[Al_2(HPO_3)_3]$,

basisches Aluminiumphosphonat $[Al(OH)H_2PO_3)_2 \cdot 2H_2O]$,

Aluminiumphosphonattetrahydrat $[Al_2(HPO_3)_3 \cdot 4H_2O]$ und

$Al_2(HPO_3)_3 \cdot xAl_2O_3 \cdot nH_2O$ mit x im Bereich von 2,27 bis 1 und n im Bereich von 0 bis 4.

Ganz besonders bevorzugt sind sekundäres Aluminiumphosphonat $Al_2(HPO_3)_3$ [CAS No. 71449-76-8] und sekundäres Aluminiumphosphonattetrahydrat $Al_2(HPO_3)_3 \cdot 4H_2O$ [CAS No. 156024-71-4], insbesondere bevorzugt ist sekundäres Aluminiumphosphonat $Al_2(HPO_3)_3$.

Die Herstellung erfindungsgemäß als Komponente g) einzusetzender Aluminiumsalze der Phosphonsäure ist zum Beispiel in WO 2013/083247 A1 beschrieben. Sie erfolgt üblicherweise durch Umsetzung einer Aluminiumquelle, bevorzugt Aluminiumisopropoxid, Aluminiumnitrat, Aluminiumchorid oder Aluminiumhydroxid, mit einer Phosphorquelle, bevorzugt Phosphonsäure, Ammoniumphosphonat, Alkaliphosphonat, und wahlweise mit einem Templat in einem Lösungsmittel bei 20 bis 200°C während einer Zeitspanne von bis zu 4 Tagen. Aluminiumquelle und Phosphorquelle werden dazu vermischt, unter hydrothermalen Bedingungen oder unter Rückfluss erhitzt, abfiltriert gewaschen und getrocknet. Bevorzugte Template dabei sind 1,6 Hexandiamin, Guanidincarbonat oder Ammoniak. Bevorzugtes Lösungsmittel ist Wasser.

**Komponente h)**

Als Komponente h) wird wenigstens ein weiteres, von den Komponenten b) c), d), e), f) und g) verschiedenes **Additiv** eingesetzt. Bevorzugte als Komponente h) einzusetzende Additive sind Antioxidantien, Thermostabilisatoren, UV-Stabilisatoren, Gammastrahlenstabilisatoren, Komponenten zur Verringerung der Wasseraufnahme bzw. Hydrolysestabilisatoren, Antistatika, Emulgatoren, Nukleierungsmittel, Weichmacher, Verarbeitungshilfsmittel, Gleit- und/oder Entformungsmittel, Komponenten zur Verringerung der Wasseraufnahme, Fließhilfsmittel, kettenverlängernd wirkende Additive Farbmittel oder Laserabsorber. Die Additive können alleine oder in Mischung bzw. in Form von Masterbatchen eingesetzt werden.

Bevorzugte **Thermostabilisatoren** der Komponente h) sind von Komponente b) verschiedene sterisch gehinderte Phenole, insbesondere solche enthaltend mindestens eine 2,6-Di-tert.-butylphenyl-Gruppe und/oder 2-tert.-Butyl-6-methylphenyl-Gruppe, ferner Phosphite, Hydrochinone, aromatische sekundäre Amine verschieden von Komponente e), substituierte Resorcine, Salicylate, Benzotriazole und Benzophenone, 3,3'-Thiodipropionsäureester sowie verschieden substituierte Vertreter dieser Gruppen oder deren Mischungen.

Als Komponente h) einzusetzende Thermostabilisatoren werden vorzugsweise zu 0,01 bis 2 Massenanteilen, besonders bevorzugt zu 0,05 bis 1 Massenanteilen, jeweils bezogen auf 100 Massenanteile der Komponente a) eingesetzt.

Als Komponente h) einzusetzende **UV-Stabilisatoren** werden vorzugsweise substituierte Resorcine, Salicylate, Benzotriazole und Benzophenone, HALS-Derivate ("Hindered Amine Light Stabilizers") enthaltend mindestens eine 2,2,6,6-Tetramethyl-4-piperidyl-Einheit oder Benzophenone eingesetzt. Als Komponente h) einzusetzende UV-Stabilisatoren werden vorzugsweise zu 0,01 bis 2 Massenanteilen, besonders bevorzugt zu 0,1 bis 1 Massenanteilen, jeweils bezogen auf 100 Massenanteile der Komponente a) eingesetzt.

Als Komponente h) einzusetzende **Farbmittel** werden in einer Ausführungsform bevorzugt anorganische Pigmente eingesetzt, besonders bevorzugt Ultramarinblau, Bismutvanadat [CAS No. 14059-33-7], Eisenoxid [CAS No. 1309-37-1], Titandioxid [CAS No. 13463-67-7 (Rutil) oder CAS No. 1317-70-0 (Anatas)], Bariumsulfat [CAS No. 7727-43-7], Zinksulfid [CAS No. 1314-98-3] oder Sulfide enthaltend Cer. Bevorzugte Sulfide enthaltend Cer sind Cer(III) sulfid ($Ce_2S_3$) [CAS-No. 12014-93-6], auch bekannt als C.I.Pigment Orange 75, oder Cer(III)sulfid / Lanthan(III)sulfid ($Ce_2S_3$ / $La_2S_3$) [CAS-No. 12014-93-6 ; CAS-No. 12031-49-1] auch bekannt als C.I. Pigment Orange 78. Insbesondere bevorzugt ist Bariumsulfat. Insbesondere bevorzugt ist auch Titandioxid, auch als Pigment White 6 oder CI 77891 bezeichnet.

Erfindungsgemäß ebenfalls als Komponente h) einzusetzende **Farbmittel** sind vorzugsweise auch Pigmentsysteme auf Basis anorganischer Mischoxide enthaltend Titandioxid, Zinnoxid und Zinkoxid. Ein als Komponente h) erfindungsgemäß bevorzugt einzusetzendes Pigmentsystem auf Basis anorganischer Mischoxide enthaltend Titandioxid, Zinnoxid und Zinkoxid ist aus EP 0 113 229 B1 bekannt, ebenso dessen Herstellung. Der Inhalt der EP 0 113 229 B1

wird von der vorliegenden Beschreibung vollumfänglich umfasst. Gemäß EP 0 113 229 B1 werden die Mengenverhältnisse der Zinn- , Titan-, Zink- und Sauerstoffanteile in einem erfindungsgemäß als Komponente g) einzusetzenden Pigmentsystem vorzugsweise durch die allgemeine Formel (XIII) wiedergegeben

$$(TiO_2)_cSnO(ZnO)_d(SnO)_e, \qquad (XIII)$$

worin c im Bereich von 0,3 bis 6,2 liegt, d im Bereich von 0,04 bis 6,2 liegt und e im Bereich von 0 bis 7 liegt.

Vorzugsweise enthält ein als Komponente h) einzusetzendes Pigmentsystem der allgemeinen Formel (XIII) 300 bis 6000 Atomteile Alkalimetallreste pro Million Atomteile des gesamten Komplexes bzw. Pigmentsystems. Ein als Komponente h) einzusetzendes Pigmentsystem auf Basis anorganischer Mischoxide aus Titandioxid, Zinnoxid und Zinkoxid kann erfindungsgemäß einzeln oder im Gemisch mit wenigstens einem weiteren anorganischen Mischoxid aus Titandioxid, Zinnoxid und Zinkoxideingesetzt werden. Insbesondere bevorzugt ist ein Pigmentsystem der allgemeinen Formel (XIII) der CAS-Nr. 923954-49-8, oder C.I. Pigment Orange 82 [CAS-Nr. 2170864-77-2] oder C.I.Pigment Yellow 216 [CAS-Nr. 817181-98-9] einzusetzen. Bezüglich der C.I. Klassifizierung siehe: **https://de.wikipedia.org/wiki/Colour_Index.** Pigment Orange 82 kann beispielsweise unter dem Namen Sicopal® Orange K2430 bei der Firma BASF SE, Ludwigshafen, Deutschland bezogen werden. Pigment Yellow 216 kann beispielsweise unter dem Namen Orange 10P340 bei der Firma Shepherd, Gent, Belgien bezogen werden.

Als Komponente h) einzusetzende weitere **Farbmittel** werden in einer Ausführungsform bevorzugt organische Farbmittel eingesetzt, besonders bevorzugt Phthalocyanine, Chinacridone, Benzimidazole, insbesondere Ni-2-hydroxy-napthyl-benzimidazol [CAS Nr. 42844-93-9] und/oder Pyrimidin-azo-benzimidazol [CAS-Nr. 72102-84-2] und/oder Pigment Yellow 192 [CAS Nr. 56279-27-7], außerdem Perylene, Anthrachinone, insbesondere C.I. Solvent Yellow 163 [CAS Nr. 13676-91-0] und Phthaloperine, insbesondere 10,10'-Oxy-bis-12H-phthaloperin-12-on [CAS Nr. 203576-97-0] und 12H-Phthaloperin-12-on [CAS Nr. 6925-69-5], wobei 10,10'-Oxy-bis-12H-phthaloperin-12-on insbesondere bevorzugt ist.

In einer alternativen Ausführungsform können - sofern es der Bedarf erfordert - auch Ruß oder Nigrosin als Farbmittel der Komponente h) eingesetzt werden.

In einer besonders bevorzugten Ausführungsform werden die Farbmittel erfindungsgemäß so eingesetzt, dass die farbstabilen, schlagzähen Polyamid basierten Erzeugnisse "orange" eingefärbt sind, wobei Farbtöne, die im RAL-Farbsystem "ähnlich" zu denen der Farbnummern RAL2001, RAL2003, RAL2004, RAL2007, RAL2008, RAL2009, RAL2010 und RAL2011 sind, bevorzugt sind und solche Farbtöne die "ähnlich" zu den Farbnummern RAL2003, RAL2008 und RAL2011 sind, ganz besonders bevorzugt sind.

Unter "orange" wird erfindungsgemäß ein Farbton verstanden, der "ähnlich" zu einem Farbton einer mit "2" beginnenden Farbnummer der RAL-Farbtabelle ist. "Ähnliche" Farbtöne sind dabei erfindungsgemäß solche, deren Farbabstand im L*a*b*-System einen $\Delta E$ von <20, bevorzugt ein $\Delta E$ <10, besonders bevorzugt $\Delta E$ <5 zu der Farbe der RAL-Farbtabelle aufweisen. Zur Erläuterung des in **EN ISO 11664-4** definierten $\Delta E$ siehe beispielsweise: **https://de.wikipedia.org/wiki/Delta_E.**

Als Komponente h) einzusetzende **Nukleierungsmittel** sind vorzugsweise Natrium- oder Calciumphenylphosphinat, Aluminiumoxid, Siliziumdioxid oder Talkum. Besonders bevorzugt wird als Nukleierungsmittel Talkum [CAS-Nr.14807-96-6] eingesetzt, insbesondere mikrokristallines Talkum. Talkum, auch als Talk bezeichnet, ist ein Schichtsilikat mit der chemischen Zusammensetzung $Mg_3[Si_4O_{10}(OH)_2]$, das je nach Modifikation als Talk-1A im triklinen oder als Talk-2M im monoklinen Kristallsystem kristallisiert **(http://de.wikipedia.org/wiki/Talkum).** Erfindungsgemäß einzusetzendes Talkum kann beispielsweise als Mistron® R10 von Imerys Talc Group, Toulouse, Frankreich (Rio Tinto Group) bezogen werden.

Als Komponente h) einzusetzende **Fließhilfsmittel** werden bevorzugt Copolymerisate aus mindestens einem $\alpha$-Olefin mit mindestens einem Methacrylsäurester oder Acrylsäureester eines aliphatischen Alkohols eingesetzt. Besonders bevorzugt sind dabei Copolymerisate, bei denen das $\alpha$-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel geeignete Copolymerisate zeichnen sich neben der Zusammensetzung auch durch das niedrige Molekulargewicht aus. Dementsprechend sind für die erfindungsgemäßen Polymerzusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen **ISO 1133** oder **ASTM D 1238.** Insbesondere bevorzugt wird als Fließhilfsmittel ein Copolymerisat aus Ethen und Acrylsäure-(2-ethyl)-hexylester mit MFI 550 eingesetzt, bekannt als Lotryl® 37EH550.

Als Komponente h) einzusetzende **kettenverlängernde Additive** werden bevorzugt di- oder mehrfunktionelle verzweigend oder kettenverlängernd wirkende Additive, enthaltend mindestens zwei verzweigend oder kettenverlängernd wirkende funktionelle Gruppen pro Molekül, eingesetzt. Als verzweigende bzw. kettenverlängende Additive werden

niedermolekulare oder oligomere Verbindungen bevorzugt, die über mindestens zwei kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone, wobei Epoxide bevorzugt sind.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS No. 98460-24-3] oder epoxidierte Fettsäureester des Glycerins, sowie auch ganz besonders bevorzugt epoxidiertes Sojaöl [CAS No. 8013-07-8] und/oder epoxidiertes Leinöl.

Bevorzugt als Komponente h) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Als Komponente h) einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate, insbesondere solche auf Basis von Pentaerythritol, insbesondere Fettsäureester des Pentaerythritols oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen im Bereich von 28 bis 32 C-Atomen.

Erfindungsgemäß werden besonders bevorzugt Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen oder Amide von Aminen mit 2 bis 40 C-Atomen mit ungesättigten aliphatischen Carbonsäuren mit 8 bis 40 C-Atomen bzw. statt jeweils der Carbonsäuren Metallsalze gesättigter oder ungesättigter aliphatischer Carbonsäuren mit 8 bis 40 C-Atomen eingesetzt.

Ganz besonders bevorzugt als Komponente h) einzusetzende Gleit- und/oder Entformungsmittel sind auszuwählen aus der Gruppe Pentaerythritoltetrastearat [CAS No. 115-83-3], Ethylen-bis-stearylamid, Zinkstearat, Calciumstearat und Ethylenglycoldimontanat. Insbesondere bevorzugt wird Zinkstearat [CAS No. 557-05-1], Calciumstearat [CAS No. 1592-23-0] oder Ethylen-bis-stearylamid [CAS No. 110-30-5] eingesetzt. Insbesondere besonders bevorzugt wird Zinkstearat [CAS No. 557-05-1] eingesetzt.

Als Komponente h) bevorzugt einzusetzende **Hydrolysestabilisatoren bzw. Komponenten zur Verringerung der Wasseraufnahme** sind bevorzugt Polyester, wobei Polybutylenterepthalat und/oder Polyethylenterephthalat bevorzugt sind und Polyethylenterephthalat ganz besonders bevorzugt ist. Die Polyester werden dabei bevorzugt in Konzentrationen von 5 bis 20 Gew.-% und besonders bevorzugt in Konzentrationen von 7 bis 15 Gew-% eingesetzt, jeweils bezogen auf die gesamte Polymerzusammensetzung und mit der Maßgabe, dass die Summe aller Gewichtsprozente der Polymerzusammensetzung stets 100 Gew.-% ergibt.

Als Komponente h) bevorzugt einzusetzende **Laserabsorber** werden ausgewählt aus der Gruppe Zinnoxid, Zinnorthophosphat, Bariumtitanat, Aluminiumoxid, Kupferhydroxyphosphat, Kupferorthophosphat, Kaliumkupferdiphosphat, Kupferhydroxid, Bismuttrioxid, Zinn und/oder Antimonoxid dotierte Glimmer und Antrachinon. Besonders bevorzugt ist Zinnoxid.

In einer alternativen Ausführungsform kann als Laserabsorber aber auch - sofern der Bedarf es erfordert unter Berücksichtigung der Nachteile hinsichtlich einer Gefahrenklassifizierung H351 - auch Antimonzinnoxid, Antimontrioxid oder Antimonpentoxid eingesetzt werden.

Der Laserabsorber kann direkt als Pulver oder in Form von Masterbatchen eingesetzt werden. Bevorzugte Masterbatche sind solche auf Basis von Polyamid und/oder Polyolefinen, bevorzugt Polyethylen. Ganz besonders bevorzugt wird der Laserabsorber in Form eines Polyamid 6-basierten Masterbatches eingesetzt.

Der Laserabsorber kann einzeln oder als Gemisch mehrerer Laserabsorber eingesetzt werden. Laserabsorber können Laserlicht einer bestimmten Wellenlänge absorbieren. In der Praxis liegt diese Wellenlänge im Bereich von 157 nm bis 10,6 $\mu$m. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, und $CO_2$-Laser eingesetzt.

**Besonders bevorzugte Zusammensetzungen/ Erzeugnisse**

Insbesondere ganz besonders bevorzugt betrifft die vorliegende Erfindung **Zusammensetzungen** und daraus

herzustellende **Erzeugnisse** enthaltend

a) wenigstens ein Polyamid, vorzugsweise Polyamid 6 oder Polyamid 66,

b) wenigstens ein sterisch gehindertes Phenol der allgemeinen Formel (II)

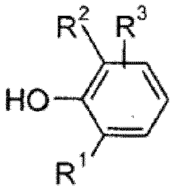

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht,

c) wenigstens ein Phosphinsäurederivat der allgemeinen Formel (I),

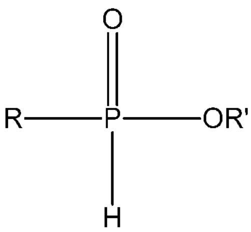

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,

d) wenigstens ein 3-Thiopropionat der allgemeinen Formel (VI),

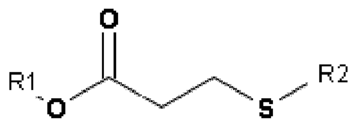

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht. wenigstens Glasfasern, und

e) 4,4'-Bis(phenylisopropyl)diphenylamin

mit der Maßgabe, dass auf 38 bis 85 Gew.-%, vorzugsweise 65 bis 70 Gew.-% der Komponente a)

0,1 bis 0,3 Gew.-% der Komponente b),

0,3 bis 1 Gew.-% der Komponente c),

0,2 bis 0,6 Gew.-% der Komponente d)

0,1 bis 1 Gew.-% der Komponente e) und

15 bis 60 Gew.-%, vorzugsweise 25 bis 34,4 Gew.-% der Komponente f) eingesetzt werden und die Summe aller

Gewichtsprozente stets 100 ergibt.

Insbesondere ganz besonders bevorzugt betrifft die vorliegende Erfindung **Zusammensetzungen** und daraus herzustellende **Erzeugnisse** enthaltend

a) wenigstens ein Polyamid, vorzugsweise Polyamid 6 oder Polyamid 66,

b) 3,9-Bis[2-[3-(3-tert-butyl-4-hydroxy-5-methylphenyl)-propionyloxy]-1,1-dimethylethyl]-2,4,8,10-tetraoxaspiro-[5.5]undecan,

c) Natriumhypophosphit,

d) Pentaerythrityltetrakis(3-dodecylthiopropionat),

e) 4,4'-Bis(phenylisopropyl)diphenylamin und

f) Glasfasern

mit der Maßgabe, dass auf 38 bis 85 Gew.-%, vorzugsweise 65 bis 70 Gew.-% der Komponente a)

0,1 bis 0,3 Gew.-% der Komponente b),

0,3 bis 1 Gew.-% der Komponente c),

0,2 bis 0,6 Gew.-% der Komponente d),

0,1 bis 1 Gew.-% der Komponente e) und

15 bis 60 Gew.-%, vorzugsweise 25 bis 34,4 Gew.-% der Komponente f) eingesetzt werden und die Summe aller Gewichtsprozente stets 100 ergibt.

**Besonders bevorzugte Verwendungen**

Die Erfindung betrifft bevorzugt die Verwendung von **4,4'-Bis(phenylisopropyl)diphenylamin** in Kombination mit b) wenigstens einem sterisch gehinderten Phenol der allgemeinen Formel (II)

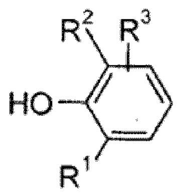

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht,
zum Erhalt der Schlagzähigkeit gemessen nach **ISO180-1U** und/oder zum Erhalt der Bruchdehnung gemessen nach **ISO 527** nach Heißluftalterung über 500h bei 150°C und/oder zum Farberhalt berechnet gemäß **DIN EN ISO 11664-4** nach Heißluftlagerung über 500h bei 150°C und/oder zum Farberhalt berechnet gemäß **DIN EN ISO 11664-4** nach UV-Lagerung angelehnt an **DIN ISO 4892-2A** über 200h bei 80°C, 340 nm und 1,55 W/$m^2$ ohne Beregnung von Polyamid basierten Erzeugnissen.

Die Erfindung betrifft bevorzugt ferner die Verwendung von 4,4'-**Bis(phenylisopropyl)diphenylamin** in Kombination mit c) wenigstens eine Phosphinsäurederivat der allgemeinen Formel (I),

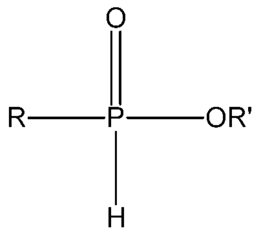

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$Alkylgruppe steht, zum Erhalt der Schlagzähigkeit gemessen nach **ISO180-1U** und/oder zum Erhalt der Bruchdehnung gemessen nach **ISO 527** nach Heißluftalterung über 500h bei 150°C und/oder zum Farberhalt berechnet gemäß **DIN EN ISO 11664-4** nach Heißluftlagerung über 500h bei 150°C und/oder zum Farberhalt berechnet gemäß **DIN EN ISO 11664-4** nach UV-Lagerung angelehnt an **DIN ISO 4892-2A** über 200h bei 80°C, 340 nm und 1,55 W/$m^2$ ohne Beregnung von Polyamid basierten Erzeugnissen.

Die Erfindung betrifft bevorzugt ferner die Verwendung von 4,4'-**Bis(phenylisopropyl)diphenylamin** in Kombination mit d) wenigstens ein 3-Thiopropionat der allgemeinen Formel (VI),

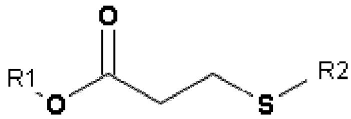

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht,

zum Erhalt der Schlagzähigkeit gemessen nach **ISO180-1U** und/oder zum Erhalt der Bruchdehnung gemessen nach **ISO 527** nach Heißluftalterung über 500h bei 150°C und/oder zum Farberhalt berechnet gemäß **DIN EN ISO 11664-4** nach Heißluftlagerung über 500h bei 150°C und/oder zum Farberhalt berechnet gemäß **DIN EN ISO 11664-4** nach UV-Lagerung angelehnt an **DIN ISO 4892-2A** über 200h bei 80°C, 340 nm und 1,55 W/$m^2$ ohne Beregnung von Polyamid basierten Erzeugnissen.

Die Erfindung betrifft bevorzugt ferner die Verwendung von 4,4'-**Bis(phenylisopropyl)diphenylamin** in Kombination mit b) wenigstens ein sterisch gehindertes Phenol der allgemeinen Formel (II)

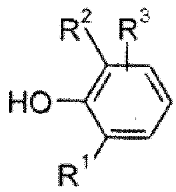

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht, und

c) wenigstens eine Phosphinsäurederivat der allgemeinen Formel (I),

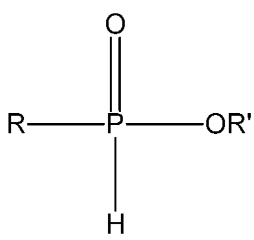

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$Alkylgruppe steht,

zum Erhalt der Schlagzähigkeit gemessen nach **ISO180-1U** und/oder zum Erhalt der Bruchdehnung gemessen nach **ISO 527** nach Heißluftalterung über 500h bei 150°C und/oder zum Farberhalt berechnet gemäß **DIN EN ISO 11664-4** nach Heißluftlagerung über 500h bei 150°C und/oder zum Farberhalt berechnet gemäß **DIN EN ISO 11664-4** nach UV-Lagerung angelehnt an **DIN ISO 4892-2A** über 200h bei 80°C, 340 nm und 1,55 W/$m^2$ ohne Beregnung von Polyamid basierten Erzeugnissen.

Die Erfindung betrifft bevorzugt ferner die Verwendung von 4,4'-**Bis(phenylisopropyl)diphenylamin** in Kombination mit b) wenigstens ein sterisch gehindertes Phenol der allgemeinen Formel (II)

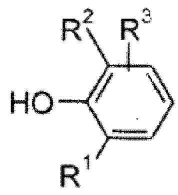

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht, und

d) wenigstens ein 3-Thiopropionat der allgemeinen Formel (VI),

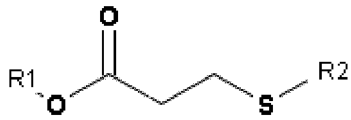

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht,

zum Erhalt der Schlagzähigkeit gemessen nach **ISO180-1U** und/oder zum Erhalt der Bruchdehnung gemessen nach **ISO 527** nach Heißluftalterung über 500h bei 150°C und/oder zum Farberhalt berechnet gemäß **DIN EN ISO 11664-4** nach Heißluftlagerung

über 500h bei 150°C und/oder zum Farberhalt berechnet gemäß **DIN EN ISO 11664-4** nach UV-Lagerung angelehnt an **DIN ISO 4892-2A** über 200h bei 80°C, 340 nm und 1,55 W/$m^2$ ohne Beregnung von Polyamid basierten Erzeugnissen.

Die Erfindung betrifft bevorzugt ferner die Verwendung von 4,4'-**Bis(phenylisopropyl)diphenylamin** in Kombination mit c) wenigstens eine Phosphinsäurederivat der allgemeinen Formel (I),

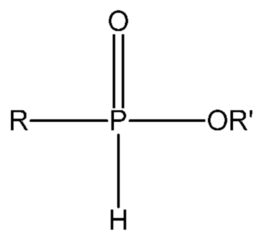

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$Alkylgruppe steht,

d) wenigstens ein 3-Thiopropionat der allgemeinen Formel (VI),

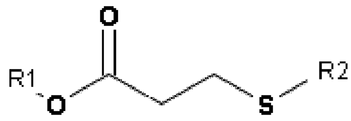

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht,

zum Erhalt der Schlagzähigkeit gemessen nach **ISO180-1U** und/oder zum Erhalt der Bruchdehnung gemessen nach **ISO 527** nach Heißluftalterung über 500h bei 150°C und/oder zum Farberhalt berechnet gemäß **DIN EN ISO 11664-4** nach Heißluftlagerung über 500h bei 150°C und/oder zum Farberhalt berechnet gemäß **DIN EN ISO 11664-4** nach UV-Lagerung angelehnt an **DIN ISO 4892-2A** über 200h bei 80°C, 340 nm und 1,55 W/$m^2$ ohne Beregnung von Polyamid basierten Erzeugnissen.

Die Erfindung betrifft zudem die Verwendung der Komponenten

b) wenigstens ein sterisch gehindertes Phenol der allgemeinen Formel (II)

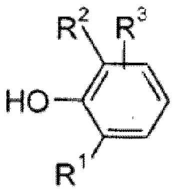

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht,

c) wenigstens eine Phosphinsäurederivat der allgemeinen Formel (I),

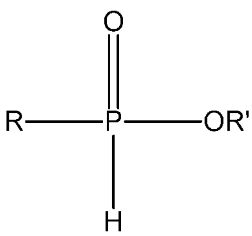

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$Alkylgruppe steht, d) wenigstens ein 3-Thiopropionat der allgemeinen Formel (VI),

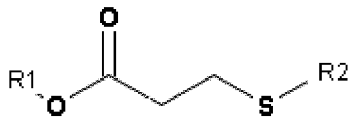

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht, und

e) 4,4'-Bis(phenylisopropyl)diphenylamin (Antioxidant 445)

zum Erhalt der Schlagzähigkeit gemessen nach **ISO180-1U** und/oder zum Erhalt der Bruchdehnung gemessen nach **ISO 527** nach Heißluftalterung über 500h bei 150°C und/oder zum Farberhalt berechnet gemäß **DIN EN ISO 11664-4** nach Heißluftlagerung über 500h bei 150°C und/oder zum Farberhalt berechnet gemäß **DIN EN ISO 11664-4** nach UV-Lagerung angelehnt an **DIN ISO 4892-2A** über 200h bei 80°C, 340 nm und 1,55 $W/m^2$ ohne Beregnung von Polyamid basierten Erzeugnissen

mit der Maßgabe, dass auf 100 Massenanteile wenigstens eines als Komponente a) einzusetzenden Polyamids 0,03 bis 3 Massenanteile der Komponente b), 0,05 bis 5 Massenanteile der Komponente c), 0,05 bis 5 Massenanteile der Komponente d) und 0,2 bis 1 Massenanteile der Komponente e) eingesetzt werden.

Auch im Falle der erfindungsgemäßen Verwendungen ist unter einem guten Alterungsverhalten ein Farberhalt bzw. ein Erhalt der Farbstabilität nach Heißluftalterung im Vergleich zu Polyamid basierten Erzeugnissen enthaltend die Komponenten a), b), c) und d), nicht jedoch Komponente e) zu verstehen. Vorzugsweise ist der zu ermittelnde Farbabstand ΔE berechnet gemäß **DIN EN ISO 11664-4** nach Heißluftlagerung über 500 h bei 150°C gering und liegt besonders bevorzugt im Bereich von 0 bis 20, ganz besonders bevorzugt im Bereich von 0 bis 15. Auch im Falle der erfindungsgemäßen Verwendungen ist der Farbabstand ΔE eine dimensionslose Größe. Je kleiner der Wert, desto geringer ist der Farbabstand zu einem Ausgangswert. Ein Farbabstand ΔE = 0 entspricht demnach keiner Änderung der Farbe, sondern einer gleichbleibenden Farbe.

Auch im Falle der erfindungsgemäßen Verwendungen ist unter einem guten Alterungsverhalten in Form einer verbesserten UV-Stabilität zu verstehen, dass der Farbabstand ΔE berechnet gemäß **DIN EN ISO 11664-4** nach UV-Lagerung gemäß **DIN ISO 4892-2A** über 200h bei 80°C, 340 nm und 1,55 $W/m^2$ ohne Beregnung gering ausfällt, vorzugsweise der Farbabstand ΔE im Bereich von 0 bis 30 liegt, besonders bevorzugt der Farbabstand ΔE im Bereich von 0 bis 20 liegt. Auch im Falle der erfindungsgemäßen Verwendungen ist der Farbabstand ΔE eine dimensionslose Größe. Je kleiner der Wert, desto geringer ist der Farbabstand zu einem Ausgangswert. Ein Farbabstand ΔE = 0 entspricht demnach keiner Änderung der Farbe, sondern einer gleichbleibenden Farbe.

Auch im Falle der erfindungsgemäßen Verwendungen ist unter einem guten Alterungsverhalten in Form eines ausreichenden Erhalts der Schlagzähigkeit nach Heißluftalterung zu verstehen, dass die Schlagzähigkeit gemessen nach **ISO180-1U** vor und nach Heißluftalterung über 500h bei 150°C nicht mehr als 30% im Vergleich zum Zeitpunkt bei 0 h abfällt.

Auch im Falle der erfindungsgemäßen Verwendungen ist unter einem ausreichenden Erhalt der Bruchdehnung nach Heißluftalterung zu verstehen, dass die Bruchdehnung gemessen nach **DIN EN ISO 527** vor und nach Heißluftalterung über 500h bei 150°C nicht mehr als 30% im Vergleich zum Zeitpunkt bei 0 h abfällt.

Die Erfindung betrifft ferner vorzugsweise die **Verwendung** der Komponenten

b) wenigstens eines **sterisch gehinderten Phenols** der allgemeinen Formel (II)

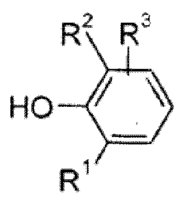

(II)

worin $R^1$ für eine tert-Butylgruppe, $R^2$ für eine Alkylgruppe mit 1 bis 9 Kohlenstoffatomen steht und $R^3$ für eine

Alkylgruppe, für eine substituierte Alkylgruppe, für eine Alkoxygruppe oder für eine substituierte Aminogruppe steht, vorzugsweise 3,9-Bis[2-[3-(3-tert-butyl-4-hydroxy-5-methylphenyl)-propionyloxy]-1,1-dimethylethyl]-2,4,8,10-tetraoxaspiro-[5.5]undecan,

c) wenigstens ein Phosphinsäurederivat der allgemeinen Formel (I),

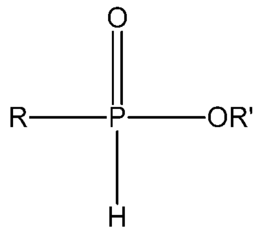

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$Alkylgruppe steht, vorzugsweise Natriumhypophosphit,

d) wenigstens ein 3-Thiopropionat der allgemeinen Formel (VII),

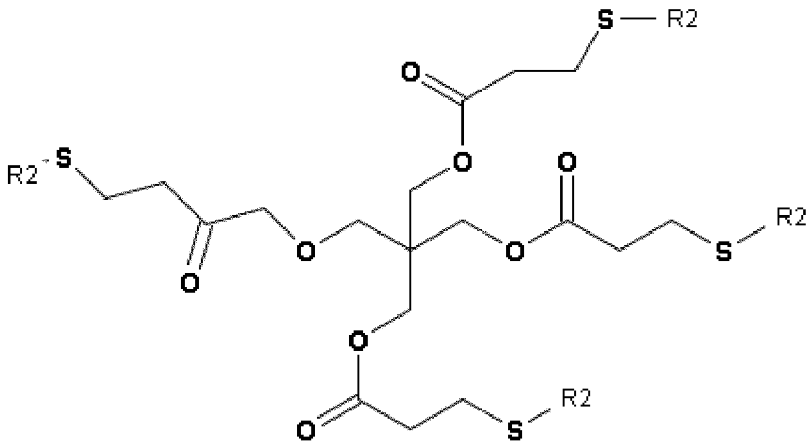

(VII)

worin R2 für einen Alkylrest mit 4 bis 20 Kohlenstoffatomen steht, vorzugsweise Pentaerythrityltetrakis(3-dodecylthiopropionat), und

e) 4,4'-Bis(phenylisopropyl)diphenylamin
zur Herstellung Polyamid basierter Erzeugnisse mit Erhalt der Schlagzähigkeit gemessen nach **ISO180-1U** und/oder mit Erhalt der Bruchdehnung gemessen nach **ISO 527** nach Heißluftalterung über 500h bei 150°C und/oder mit Farberhalt berechnet gemäß **DIN EN ISO 11664-4** nach Heißluftlagerung über 500h bei 150°C und/oder mit Farberhalt berechnet gemäß **DIN EN ISO 11664-4** nach UV-Lagerung angelehnt an **DIN ISO 4892-2A** über 200h bei 80°C, 340 nm und 1,55 W/$m^2$ ohne Beregnung im Vergleich zu Erzeugnissen enthaltend a), b), c) und d) und mit der Maßgabe, dass auf 100 Massenanteile wenigstens eines als Komponente a) einzusetzenden Polyamids, vorzugsweise Polyamid 6 oder Polyamid 66, 0,03 bis 3 Massenanteile der Komponente b), 0,05 bis 5 Massenanteile der Komponente c), 0,05 bis 5 Massenanteile der Komponente d) und 0,05 bis 5 Massenanteile der Komponente e) eingesetzt werden.

Die Erfindung betrifft ferner vorzugsweise die **Verwendung** von Mischungen enthaltend

b) wenigstens ein sterisch gehindertes Phenol der allgemeinen Formel (II)

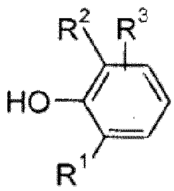

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht,

c) wenigstens ein Phosphinsäurederivat der allgemeinen Formel (I),

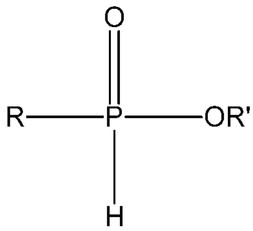

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$Alkylgruppe steht,
d) wenigstens ein 3-Thiopropionat der allgemeinen Formel (VI),

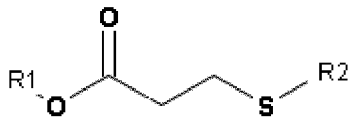

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht,

e) 4,4'-Bis(phenylisopropyl)diphenylamin und

f) Glasfasern

zur Herstellung Polyamid basierter Erzeugnisse mit Erhalt der Schlagzähigkeit gemessen nach **ISO180-1U** und/oder mit Erhalt der Bruchdehnung gemessen nach **ISO 527** nach Heißluftalterung über 500h bei 150°C und/oder mit Farberhalt berechnet gemäß **DIN EN ISO 11664-4** nach Heißluftlagerung über 500h bei 150°C und/oder mit Farberhalt berechnet gemäß **DIN EN ISO 11664-4** nach UV-Lagerung angelehnt an **DIN ISO 4892-2A** über 200h bei 80°C, 340 nm und 1,55 $W/m^2$ ohne Beregnung im Vergleich zu Erzeugnissen enthaltend a), b), c) und d) und mit der Maßgabe, dass auf 100 Massenanteile wenigstens eines als Komponente a) einzusetzenden Polyamids, vorzugsweise Polyamid 6 oder Polyamid 66, 0,03 bis 3 Massenanteile der Komponente b), 0,05 bis 5 Massenanteile der Komponente c), 0,05 bis 5 Massenanteile der Komponente d), 0,05 bis 5 Massenanteile der Komponente e) und 5 bis 185 Massenanteile der Komponente f) eingesetzt werden.

Die Erfindung betrifft ferner vorzugsweise die **Verwendung** von der Komponenten

b) 3,9-Bis[2-[3-(3-tert-butyl-4-hydroxy-5-methylphenyl)-propionyloxy]-1,1-dimethylethyl]-2,4,8,10-tetraoxaspiro-[5.5]undecan,

c) Natriumhypophosphit,

d) Pentaerythrityltetrakis(3-dodecylthiopropionat) und

e) 4,4'-bis(phenylisopropyl)diphenylamin

zur Herstellung Polyamid basierter Erzeugnisse mit Erhalt der Schlagzähigkeit gemessen nach **ISO180-1U** und/oder mit Erhalt der Bruchdehnung gemessen nach **ISO 527** nach Heißluftalterung über 500h bei 150°C und/oder mit Farberhalt berechnet gemäß **DIN EN ISO 11664-4** nach Heißluftlagerung über 500h bei 150°C und/oder mit Farberhalt berechnet gemäß **DIN EN ISO 11664-4** nach UV-Lagerung angelehnt an **DIN ISO 4892-2A** über 200h bei 80°C, 340 nm und 1,55 $W/m^2$ ohne Beregnung im Vergleich zu Erzeugnissen enthaltend a), b), c) und d) und *mitder* Maßgabe, dass auf 38 bis 85 Gew.-%, vorzugsweise 65 bis 70 Gew.-% wenigstens eines Polyamids, vorzugsweise Polyamid 6 oder Polyamid 66, 0,1 bis 0,3 Gew.-% der Komponente b), 0,3 bis 1 Gew.-% der Komponente c), 0,2 bis 0,6 Gew.-% der Komponente d), 0,1 bis 1 Gew.-% der Komponente e) und 15 bis 60 Gew.-%, vorzugsweise 25 bis 34,4 Gew.-% der als Komponente f) einzusetzenden Glasfasern eingesetzt werden und dass die Summe aller Gewichtsprozente stets 100 ergibt.

**Bevorzugte Verfahren**

Die Erfindung betrifft schließlich ein **Verfahren** zum Erhalt der Schlagzähigkeit gemessen nach **ISO180-1U** und/oder zum Erhalt der Bruchdehnung gemessen nach **ISO 527** nach Heißluftalterung über 500h bei 150°C und/oder zum Farberhalt berechnet gemäß **DIN EN ISO 11664-4** nach Heißluftlagerung über 500h bei 150°C und/oder zum Farberhalt berechnet gemäß **DIN EN ISO 11664-4** nach UV-Lagerung angelehnt an **DIN ISO 4892-2A** über 200h bei 80°C, 340 nm und 1,55 $W/m^2$ ohne Beregnung im Vergleich zu Erzeugnissen enthaltend a), b), c) und d) indem man Mischungen enthaltend

b) wenigstens ein sterisch gehindertes Phenol der allgemeinen Formel (II)

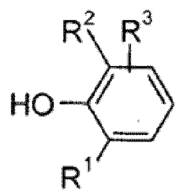

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht,

c) wenigstens ein Phosphinsäurederivat der allgemeinen Formel (I),

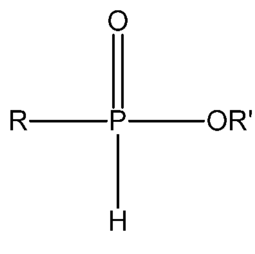

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) wenigstens ein 3-Thiopropionat der allgemeinen Formel (VI),

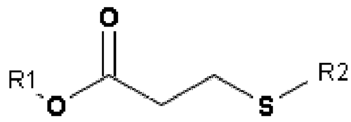

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht, und

e) 4,4'-Bis(phenylisopropyl)diphenylamin in Polyamid als Komponente a) einsetzt, vorzugsweise Polyamid 6 oder Polyamid 66, mit der Maßgabe, dass auf 100 Massenanteile der Komponente a) 0,03 bis 3 Massenanteile der Komponente b), 0,05 bis 5 Massenanteile der Komponente c), 0,05 bis 5 Massenanteile der Komponente d) und 0,05 bis 5 Massenanteile der Komponente e) eingesetzt werden.

Auch im Falle erfindungsgemäßer Verfahren ist das Ammonium-Ion $NH_4^+$ für R' ein Kation, das mit Anionen ähnlich wie Alkalimetall-Ionen Salze bildet. Es ist die konjugierte Säure zur Base Ammoniak ($NH_3$).

Die Erfindung betrifft ferner ein **Verfahren** zum Erhalt der Schlagzähigkeit gemessen nach **ISO180-1U** und/oder zum Erhalt der Bruchdehnung gemessen nach **ISO 527** nach Heißluftalterung über 500h bei 150°C und/oder zum Farberhalt berechnet gemäß **DIN EN ISO 11664-4** nach Heißluftlagerung über 500h bei 150°C und/oder zum Farberhalt berechnet gemäß **DIN EN ISO 11664-4** nach UV-Lagerung angelehnt an **DIN ISO 4892-2A** über 200h bei 80°C, 340 nm und 1,55 $W/m^2$ ohne Beregnung im Vergleich zu Erzeugnissen enthaltend a), b), c) und d) indem man Mischungen enthaltend

b) wenigstens ein **sterisch gehindertes Phenol** der allgemeinen Formel (II)

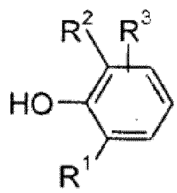

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht, vorzugsweise 3,9-Bis[2-[3-(3-tert-butyl-4-hydroxy-5-methylphenyl)-propionyloxy]-1,1-dimethylethyl]-2,4,8,10-tetraoxaspiro-[5.5]undecan,

c) wenigstens ein Phosphinsäurederivat der allgemeinen Formel (I),

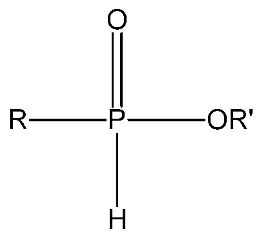

(I)

worin R für ein Wasserstoffatom oder für eine Alkyl-, Cycloalkyl- oder Aryl-Gruppe steht, und
R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, vorzugsweise Natriumhypophosphit, und

d) ein 3-Thiopropionat der allgemeinen Formel (VII),

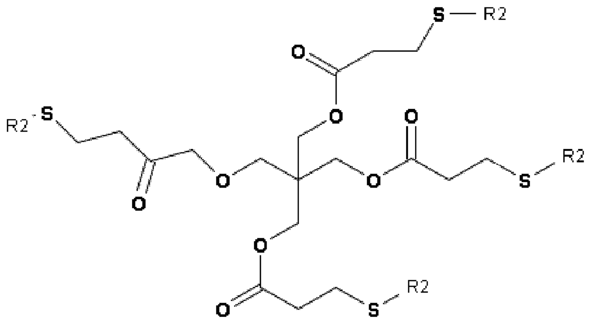

(VII)

worin R2 für einen Alkylrest mit 4 bis 20 Kohlenstoffatomen steht, vorzugsweise Pentaerythrityltetrakis(3-dodecylthiopropionat), und

e) 4,4'-Bis(phenylisopropyl)diphenylamin in Polyamid als Komponente a) einsetzt, vorzugsweise Polyamid 6 oder Polyamid 66, mit der Maßgabe, dass auf 100 Massenanteile der Komponente a) 0,03 bis 3 Massenanteile der Komponente b), 0,05 bis 5 Massenanteile der Komponente c), 0,05 bis 5 Massenanteile der Komponente d) und 0,05 bis 5 Massenanteile der Komponente e) eingesetzt werden.

Die Erfindung betrifft zudem ein **Verfahren** zum Erhalt der Schlagzähigkeit gemessen nach **ISO180-1U** und/oder zum Erhalt der Bruchdehnung gemessen nach **ISO 527** nach Heißluftalterung über 500h bei 150°C und/oder zum Farberhalt berechnet gemäß **DIN EN ISO 11664-4** nach Heißluftlagerung über 500h bei 150°C und/oder zum Farberhalt berechnet gemäß **DIN EN ISO 11664-4** nach UV-Lagerung angelehnt an **DIN ISO 4892-2A** über 200h bei 80°C, 340 nm und 1,55 W/m$^2$ ohne Beregnung im Vergleich zu Erzeugnissen enthaltend a), b), c) , d) und f) indem man Mischungen enthaltend

b) wenigstens eines sterisch gehinderten Phenols der allgemeinen Formel (II)

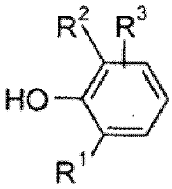

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht,

c) wenigstens eines Phosphinsäurederivats der allgemeinen Formel (I),

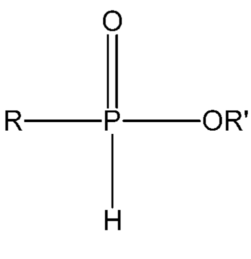

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) wenigstens eines 3-Thiopropionats der allgemeinen Formel (VI),

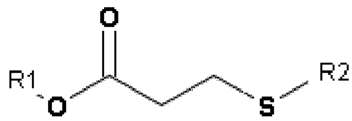

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht, und

e) 4,4'-Bis(phenylisopropyl)diphenylaminin in Polyamid als Komponente a) einsetzt, vorzugsweise Polyamid 6 oder Polyamid 66, mit der Maßgabe, dass auf 100 Massenanteile der Komponente a) und 5 bis 185 Massenanteile Massenanteile von als Komponente f) einzusetzenden Glasfasern 0,03 bis 3 Massenanteile der Komponente b), 0,05 bis 5 Massenanteile der Komponente c), 0,05 bis 5 Massenanteile der Komponente d) und 0,05 bis 5 Massenanteile der Komponente e) eingesetzt werden.

Die Erfindung betrifft schließlich ein **Verfahren** zum Erhalt der Schlagzähigkeit gemessen nach **ISO180-1U** und/oder zum Erhalt der Bruchdehnung gemessen nach **ISO 527** nach Heißluftalterung über 500h bei 150°C und/oder zum Farberhalt berechnet gemäß **DIN EN ISO 11664-4** nach Heißluftlagerung über 500h bei 150°C und/oder zum Farberhalt berechnet gemäß **DIN EN ISO 11664-4** nach UV-Lagerung angelehnt an **DIN ISO 4892-2A** über 200h bei 80°C, 340 nm und 1,55 $W/m^2$ ohne Beregnung im Vergleich zu Erzeugnissen enthaltend a), b), c), d)und f) indem man Mischungen enthaltend

b) 3,9-Bis[2-[3-(3-tert-butyl-4-hydroxy-5-methylphenyl)-propionyloxy]-1,1-dimethylethyl]-2,4,8,10-tetraoxaspiro-[5.5]undecan,

c) Natriumhypophosphit,

d) Pentaerythrityltetrakis(3-dodecylthiopropionat), und

e) 4,4'-Bis(phenylisopropyl)diphenylamin

in Polyamid als Komponente a) einsetzt, vorzugsweise Polyamid 6 oder Polyamid 66, mit der Maßgabe, dass auf 100 Massenanteile der Komponente a) und 5 bis 185 Massenanteile Massenanteile von als Komponente f) einzusetzenden Glasfasern 0,03 bis 3 Massenanteile der Komponente b), 0,05 bis 5 Massenanteile der Komponente c), 0,05 bis 5 Massenanteile der Komponente d) und 0,05 bis 5 Massenanteile der Komponente e) eingesetzt werden.

Gegenstand der vorliegenden Anmeldung ist auch die **Verwendung bzw. Verarbeitung** der aus den erfindungsgemäß einzusetzenden Komponenten herzustellenden Formmassen im Extrusionsprozess, in Blasformverfahren oder im Spritzguss zur Herstellung von Erzeugnissen, bevorzugt von Formteilen oder Halbzeugen, insbesondere mittels Spritzguss.

Erfindungsgemäße Verarbeitungsverfahren zur Herstellung von Erzeugnissen mittels Extrusion, Blasformen oder Spritzguss werden bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar durchgeführt.

Bei der Extrusion, auch als Strangpressen bezeichnet, werden feste bis dickflüssige härtbare thermoplastische Formmassen unter Druck kontinuierlich aus einer formgebenden Öffnung, vorzugsweise als Düse, Matrize oder Mundstück bezeichnet, herausgepresst. Dabei entstehen Erzeugnisse mit dem Querschnitt der Öffnung in theoretisch beliebiger Länge **(http://de.wikipedia.org/wiki/Extrusion_(Verfahrenstechnik).** Die grundsätzlichen Verfahrensschritte des Profil-Extrusionsverfahrens, einer Verfahrensform der Extrusion, sind:

1. Plastifizieren und Bereitstellen der thermoplastischen Schmelze in einem Extruder,

2. Extrusion des thermoplastischen Schmelzestrangs durch eine Kalibrierhülse, die den Querschnitt des zu extrudierenden Profils aufweist,

3. Abkühlung des extrudierten Profils in einem Kalibriertisch,

4. Weitertransport des Profils mit einem Abzug hinter dem Kalibriertisch,

5. Ablängen des zuvor endlosen Profils in einer Schneideanlage,

6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384**.**

Das Verfahren des Blasformens ist beispielsweise in **http://www.blasformen.com/** beschrieben. Beim Blasformen wird im ersten Verfahrensschritt mittels eines beheizten Extruders Kunststoffgranulat eingezogen, verdichtet, entgast, aufgeheizt, plastifiziert und zu einem plastischen Kunststoffstrang homogenisiert. Im nächsten Schritt wird die Kunststoffmasse in einen an den Extruder angeflanschten Schlauchkopf geführt. Dort wird die Kunststoffschmelze zu einem Schlauch geformt, der senkrecht aus einer Düse nach unten austritt. Der Schlauchdurchmesser wird mit unterschiedlich großen Dorn- und Düsennormalien, die an den Schlauchkopf angeflanscht werden, an den zu fertigenden Artikel angepasst. Die Schlauchdicke und das daraus resultierende Gewicht der Blasformteile wird durch die Auswahl von unterschiedlichen Durchmesser-Differenzen von Dorn zu Düse vorbestimmt.

Der Spritzguss zeichnet sich dadurch aus, dass der Rohstoff, also die zu verarbeitende thermoplastische Formmasse enthaltend die erfindungsgemäß einzusetzenden Komponenten, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

Man unterscheidet

1. Plastifizieren / Aufschmelzen

2. Einspritzphase (Füllvorgang)

3. Nachdruckphase (wegen thermischer Kontraktion bei der Kristallisation)

4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze der zu verarbeitenden und die erfindungsgemäß einzusetzenden Komponenten enthaltenden Formmasse gelöst, gekühlt und somit das zu fertigende Bauteil gefertigt. Notwendig dazu sind immer wenigstens zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Strang aus der erfindungsgemäß einzusetzenden Formmasse im Extruder eingesetzt, wobei der Extruder eine Maschine zur Herstellung von Erzeugnissen auf Basis thermoplastischer Formstücke ist. Man unterscheidet Einschneckenextruder und Doppelschneckenextruder sowie die jeweiligen Untergruppen, konventioneller Einschneckenextruder, förderwirksamer Einschneckenextruder,

gegenläufiger Doppelschneckenextruder und gleichläufiger Doppelschneckenextruder.

Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, bevorzugt Formteile, Formkörper oder Halbzeuge, erhältlich durch Extrusion oder Spritzguss der erfindungsgemäßen, wenigstens die Komponenten a), b), c), d) und e) sowie gegebenenfalls f) enthaltenden Formmassen.

Die Zubereitung erfindungsgemäß einzusetzender Zusammensetzungen für die Herstellung von im Spritzguss, in der Extrusion oder zum Blasformen einzusetzender Formmassen erfolgt durch Mischen der einzelnen Komponenten a), b), c), d) und e) sowie gegebenenfalls weiterer Komponenten in wenigstens einem Mischaggregat, vorzugsweise einem Compounder, besonders bevorzugt einem gleichsinnig drehenden Zweiwellenextruder. Durch diesen Mischvorgang, auch als Compoundieren bezeichnet, werden als Zwischenprodukte Formmassen erhalten, die in Form von Pulvern, Granulaten oder in Strangform einer weiteren Verarbeitung zur Verfügung gestellt werden. Diese Formmassen - auch als thermoplastische Formmassen bezeichnet - können entweder ausschließlich aus den Komponenten a), b), c), d) und e) bestehen, oder ggf. weitere Komponenten, vorzugsweise f), g) und/oder h) enthalten.

Die vorliegende Erfindung betrifft schließlich auch die Verwendung der durch Extrusion oder Spritzguss aus Formmassen, enthaltend wenigstens die Komponenten a), b), c), d) und e) sowie ggf. f), g) und h) hergestellten Erzeugnisse, bevorzugt Formteile, Formkörper oder Halbzeuge, für elektrische oder elektronische Bauteile. Diese erfindungsgemäßen Erzeugnisse können bevorzugt in der Kraftfahrzeug-, Elektro-, Elektronik-, Telekommunikations-, Solar-, Informationstechnologie-, Computer- Industrie, im Haushalt, Sport, in der Medizin oder in der Unterhaltungsindustrie angewandt werden. Insbesondere können erfindungsgemäße Erzeugnisse für Anwendungen eingesetzt werden, bei denen eine Langzeitfarbstabilität erforderlich ist. Bevorzugt für derartige Anwendungen ist die Verwendung für Formteile in der Elektrotechnik, in Haushaltsanwendungen und in Fahrzeugen, insbesondere Hochvoltkomponenten in Fahrzeugen, insbesondere in Kraftfahrzeugen (KFZ), sowie als Haartrockner oder Haarglätter.

Die vorliegende Erfindung betrifft deshalb auch die Verwendung der erfindungsgemäßen thermoplastischen Formmassen zur Herstellung von Formteilen und Halbzeugen und wiederum daraus herzustellender Erzeugnisse, bevorzugt von Formteilen für Fahrzeuge oder für Haushaltsanwendungen, insbesondere in Form von Hochvoltkomponenten, Haartrocknern oder Haarglättern.

## Beispiele

Zum Nachweis der erfindungsgemäß beschriebenen Verbesserungen der Eigenschaften wurden zunächst durch Compoundierung entsprechende Polyamid basierte Zusammensetzungen bzw. Formmassen angefertigt. Die einzelnen Komponenten wurden hierzu in einem Zweiwellenextruder (ZSK 25 Compounder der Fa. Coperion Werner & Pfleiderer (Stuttgart, Deutschland)) bei Temperaturen im Bereich von 270 und 300°C gemischt, als Strang ausgetragen, bis zur Granulierbarkeit abgekühlt und granuliert. Nach dem Trocknen, in der Regel zwei Tage bei 80°C im Vakuumtrockenschrank, erfolgte die Verarbeitung des Granulats bei Temperaturen im Bereich von 270 bis 290°C zu Normprüfkörpern für die jeweiligen Prüfungen.

Die Schlagzähigkeit nach **ISO 180-1U** (Izod) und die Bruchdehnung nach **ISO 527** wurden an spritzgegossenen nach **DIN EN ISO 1874-2** festgelegten Prüfkörpern im spritzfrischen Zustand bei 23°C bestimmt. Der spritzfrische Zustand, auch "dry as moulded", wird in der **DIN EN ISO 1874-2** definiert. Der Lab-Farbraum (auch: CIELAB, CIEL*a*b*, Lab-Farben) beschreibt alle wahrnehmbaren Farben. Er nutzt einen dreidimensionalen Farbenraum, bei dem der Helligkeitswert L senkrecht auf der Farbebene (a,b) steht. Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. In Analogie zur Gegenfarbtheorie von Ewald Hering gibt die a-Koordinate die Farbart und Farbintensität zwischen Grün und Rot an und die b-Koordinate die Farbart und die Farbintensität zwischen Blau und Gelb. Je größer positive a- und b- und je kleiner negative a- und b-Werte, umso intensiver der Farbton. Falls a=0 und b=0, liegt ein unbunter Farbton auf der Helligkeitsachse vor. In den üblichen Softwareumsetzungen kann L* Werte zwischen 0 und 100 annehmen und a und b können im Bereich von -128 und 127 variiert werden. Die Verfärbung Polymer basierter Erzeugnisse durch die oxidative Schädigung der Polymermatrix kann durch die Messung des Farbabstands $\Delta E$ über die Lagerungszeit bei hoher Temperatur bestimmt werden. Der Farbabstand $\Delta E$ zwischen zwei Farbreizen wurde nach der Gleichung $\Delta E = [(\Delta L^*)2+(\Delta a^*)2+(\Delta b^*)2]^{1/2}$ gemäß **DIN EN ISO 11664-4** berechnet. Der Farbabstand $\Delta E$ ist eine dimensionslose Größe. Je kleiner der Wert, desto geringer ist der Farbabstand zu einem Ausgangswert. Ein Farbabstand $\Delta E = 0$ entspricht demnach keiner Änderung der Farbe, sondern einer gleichbleibenden Farbe.

Die Prüfung des Alterungsverhaltens in Form eines verbesserten Farberhalts bzw. einer verbesserten Farbstabilität wurde durch Lagerung spritzgegossener Platten mit den Maßen 60mm • 40mm • 4mm in einem Materialprüfschrank des Modells Binder FP115 bei Umluft bei Temperaturen von 150°C, im Rahmen der vorliegenden Erfindung auch als Heißluftalterung bezeichnet. Als Maß für die Verfärbung wurde der Farbabstand $\Delta E$ von spritzgegossenen Erzeugnis-

sen auf Basis erfindungsgemäßer Polymerzusammensetzungen nach Heißluftalterung über 500h vor und nach der Heißluftalterung durch die Messung der Farbwerte L*a*b* bestimmt.

$$\Delta E = [(\Delta L^*)^2+(\Delta a^*)^2+(\Delta b^*)^2]^{1/2}$$

Somit zeichnet sich erfindungsgemäß ein gutes Alterungsverhalten in Form eines verbesserten Farberhalts bzw. einer verbesserten Farbstabilität nach Heißluftalterung dadurch aus, dass die Farbänderung ΔE kleiner ausfällt. Die Farbwerte L*a*b* der Proben wurden im Rahmen der vorliegenden Erfindung an Platten mit den Maßen 60mm • 40mm • 4 mm bestimmt und daraus nach **DIN EN ISO 11664-4** der Farbabstand ΔE berechnet.

Die Farbmessung erfolgte dabei mit dem Spektralfotometer CM-2600d der Fa. Konica Minolta mit der CIE-Normlichtart D65 in Reflektion (10° Beobachterwinkel) mit Glanzeinschluss (SCE=Specular Component Excluded).

Im Rahmen der vorliegenden Erfindung erfolgte die Prüfung des Alterungsverhaltens hinsichtlich der erfindungsgemäßen Zusammensetzungen, der erfindungsgemäßen Erzeugnisse, der erfindungsgemäßen Verwendungen und der erfindungsgemäßen Verfahren in Form einer verbesserten UV-Stabilität durch Lagerung von spritzgegossenen Platten mit den Maßen 60mm • 40mm • 4 mm in einem QUV Schnellbewitterungsgerät der Firma Q-Lab gemäß **DIN ISO 4892-2A** über 200h bei 80°C, 340 nm und 1,55 W/$m^2$ ohne Beregnung, im Folgenden als UV-Lagerung bezeichnet. Als Maß für die Verfärbung wird im Rahmen der vorliegenden Erfindung der Farbabstand ΔE von spritzgegossenen Erzeugnissen auf Basis erfindungsgemäßer Polymerzusammensetzungen vor und nach UV-Lagerung für 200h durch die Messung der Farbwerte L*a*b* bestimmt. Der Farbabstand ΔE ist eine dimensionslose Größe. Je kleiner der Wert, desto geringer ist der Farbabstand zu einem Ausgangswert. Ein Farbabstand ΔE = 0 entspricht demnach keiner Änderung der Farbe, sondern einer gleichbleibenden Farbe.

$$\Delta E = [(\Delta L^*)^2+(\Delta a^*)^2+(\Delta b^*)^2]^{1/2}$$

Somit zeichnet sich erfindungsgemäß ein gutes Alterungsverhalten in Form einer verbesserten UV-Stabilität nach UV-Lagerung dadurch aus, dass die Farbänderung ΔE kleiner ausfällt im Vergleich zu Polyamid basierten Erzeugnissen ohne Komponente e). Die Farbwerte L*a*b* der Proben wurden im Rahmen der vorliegenden Erfindung an Platten mit den Maßen 60mm • 40mm • 4 mm bestimmt und daraus nach **DIN EN ISO 11664-4** der Farbabstand ΔE berechnet. Im Rahmen der vorliegenden Erfindung erfolgte die Prüfung des Alterungsverhaltens in Form eines Erhalts der Schlagzähigkeit und der Bruchdehnung durch Lagerung von spritzgegossenen, in **DIN EN ISO 1874-2** festgelegten Prüfkörpern in einem Materialprüfschrank des Modells Binder FP115 bei Umluft bei Temperaturen von 150°C. Die Schlagzähigkeit wurde gemäß **ISO 180-1U** und die Bruchdehnung im Zugversuch gemäß **ISO 527** bei 23°C an diesen Probekörpern vor (spritzfrisch) und nach Lagerung über 500 h bei 150°C bestimmt, um daraus den prozentualen Erhalt zu bestimmen.

**Edukte:**

| | |
|---|---|
| Komponente a) | Polyamid 6 (Durethan® B29, Fa. Lanxess Deutschland GmbH) |
| Komponente b) | 3,9-Bis[2-[3-(3-tert-butyl-4-hydroxy-5-methylphenyl)-propionyloxy]-1,1-dimethylethyl]-2,4,8,10-tetraoxaspiro-[5.5]undecan, CAS No. 90498-90-1, (Sumilizer® GA-80, Fa. Sumitomo Chemical) |
| Komponente c) | Natriumhypophosphit wasserfrei CAS No. 7681-53-0 (Sigma Aldrich, extra pure) |
| Komponente d) | Pentaerythrityltetrakis(3-dodecylthiopropionat), CAS No. 29598-76-3 (Sumilizer® TP-D, Fa. Sumitomo Chemical) |
| Komponente e) | 4,4'-Bis(phenylisopropyl)diphenylamin (Antioxidant 445), CAS No. 10081-67-1 (Okabest® AO445, Fa. OKA-Tec) |
| Komponente f) | Glasfaser (CS7928, Fa. Lanxess Deutschland GmbH) |

**Tab. 1:**

| | | Bsp.1 | Vgl.1 | Vgl.2 |
|---|---|---|---|---|
| Komponente a) | Gew. % | 68,65 | 68,9 | 70 |
| Komponente b) | Gew. % | 0,1 | 0,2 | 0 |
| Komponente c) | Gew. % | 0,65 | 0,5 | 0 |

(fortgesetzt)

| | | Bsp.1 | Vgl.1 | Vgl.2 |
|---|---|---|---|---|
| Komponente d) | Gew. % | 0,3 | 0,4 | 0 |
| Komponente e) | Gew. % | 0,3 | 0 | 0 |
| Komponente f) | Gew. % | 30 | 30 | 30 |
| Farbänderung ΔE nach Heißluftalterung 500 h, 150°C | | 13 | 24 | 40 |
| Erhalt der Bruchdehnung, 23°C, ISO 527-1,2 nach Heißluftalterung über 500h bei 150°C | % | 91 | 84 | 67 |
| Erhalt der Schlagzähigkeit, ISO180-1U, 23°C, nach Heißluftalterung über 500h bei 150°C | % | 49 | 48 | 41 |
| Farbänderung ΔE nach UV-Lagerung, 200h, 80°C, 340 nm, 1,55 $W/m^2$ | | 20 | 26 | 5 |

Die Ergebnisse in **Tab. 1** zeigen, dass die erfindungsgemäß einzusetzende Mischung der Komponenten b), c), d) und e) in glasfaserverstärkten Polyamid 6 basierten Erzeugnissen gemäß Beispiel 1 im Vergleich zu Vergleichsbeispiel 1, in welchem Komponente e) nicht eingesetzt wird, überraschenderweise eine verbesserte Farbstabilität in Form einer geringeren Farbänderung ΔE nach Heißluftalterung bei 150°C für 500h und nach UV-Lagerung für 200h aufweist. Gleichzeitig ist der Erhalt der Schlagzähigkeit und der Bruchdehnung nach Heißluftalterung bei 150°C für 500h im Vergleich zu Vergleichsbeispiel 1 verbessert. Ebenso treffen diese Verbesserungen im Vergleich zum Vergleichsbeispiel 2 zu, in dem die Komponenten b), c), d) und e) nicht eingesetzt werden. "n.b." steht für nicht bestimmt.

## Patentansprüche

**1.** Zusammensetzungen sowie darauf basierende Erzeugnisse enthaltend

a) wenigstens ein Polyamid,
b) wenigstens ein sterisch gehindertes Phenol,
c) wenigstens ein Phosphinsäurederivat der allgemeinen Formel (I),

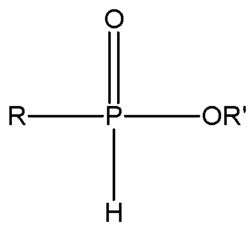

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$Alkylgruppe steht,

d) wenigstens ein 3-Thiopropionat, und
e) 4,4'-Bis(phenylisopropyl)diphenylamin

mit der Maßgabe, dass auf 100 Massenanteile der Komponente a)
0,03 bis 3 Massenanteile der Komponente b),
0,05 bis 5 Massenanteile der Komponente c),
0,05 bis 5 Massenanteile der Komponente d) und
0,05 bis 5 Massenanteile der Komponente e) eingesetzt werden.

**2.** Zusammensetzungen sowie darauf basierende Erzeugnisse gemäß Anspruch 1, **dadurch gekennzeichnet, dass** diese zusätzlich zu den Komponenten a), b), c), d) und e) noch f) wenigstens einen Füllstoff, vorzugsweise Glasfasern, zu 5 bis 185 Massenanteilen bezogen auf 100 Massenanteile der Komponente a) enthalten.

3. Zusammensetzungen sowie darauf basierende Erzeugnisse gemäß Anspruch 1 oder 2, **dadurch gekennzeichnet, dass** diese zusätzlich zu den Komponenten a), b), c), d) und e) oder zusätzlich zu den Komponenten a), b), c), d), e) und f) noch wenigstens ein von den Komponenten b), c), d), e) und f) verschiedenes Flammschutzmittel g) zu 3 bis 100 Massenanteilen, bezogen auf 100 Massenanteile der Komponente a) enthalten.

4. Zusammensetzungen sowie darauf basierende Erzeugnisse gemäß einem oder mehreren der Ansprüche 1 bis 3, **dadurch gekennzeichnet, dass** als Komponente a) Polyamid 6, Polyamid 66, Polyamid 46 und/oder teilaromatische Copolyamide eingesetzt werden, vorzugsweise Polyamid 6 oder Polyamid 66.

5. Zusammensetzungen sowie darauf basierende Erzeugnisse gemäß einem oder mehreren der Ansprüche 1 bis 4, **dadurch gekennzeichnet, dass** als Komponente b) sterisch gehinderte Phenole der allgemeinen Formel (II),

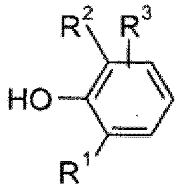

(II)

eingesetzt werden, worin $R^1$ für eine tert-Butylgruppe steht, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht.

6. Zusammensetzungen sowie darauf basierende Erzeugnisse gemäß Anspruch 5, **dadurch gekennzeichnet, dass** in Formel (II) $R^1$ und $R^2$ jeweils für eine tert-Butylgruppe stehen und $R^3$ für eine Alkylgruppe, für eine substituierte Alkylgruppe, für eine Alkoxygruppe oder für eine substituierte Aminogruppe steht.

7. Zusammensetzungen sowie darauf basierende Erzeugnisse gemäß Anspruch 5, **dadurch gekennzeichnet, dass** in Formel (II) $R^1$ für eine Methylgruppe steht und $R^2$ für eine substituierte Alkylgruppe und $R^3$ für eine Alkylgruppe, für eine substituierte Alkylgruppe, für eine Alkoxygruppe oder für eine substituierte Aminogruppe steht.

8. Zusammensetzungen sowie darauf basierende Erzeugnisse gemäß Anspruch 5, **dadurch gekennzeichnet, dass** in Formel (II) $R^1$ für eine Methylgruppe steht und $R^2$ für eine tert-Butylgruppe steht und $R^3$ für eine Alkylgruppe, für eine substituierte Alkylgruppe, für eine Alkoxygruppe oder für eine substituierte Aminogruppe steht.

9. Zusammensetzungen sowie darauf basierende Erzeugnisse gemäß einem oder mehreren der Ansprüche 1 bis 5, **dadurch gekennzeichnet, dass** als Komponente b) Verbindungen der allgemeinen Formel (V)

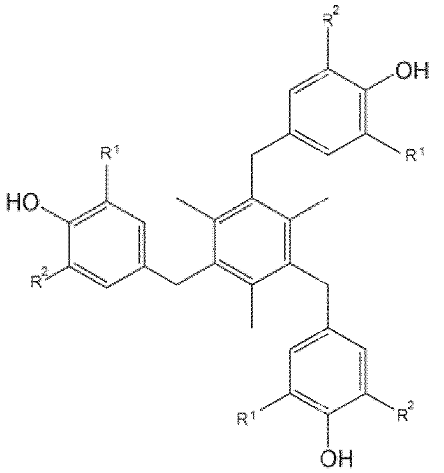

(V)

eingesetzt werden, worin $R^1$ und $R^2$ unabhängig voneinander für $C_1$-$C_8$-Alkylgruppen stehen, die ihrerseits substituiert sein können und wovon mindestens eine davon eine sterisch anspruchsvolle Gruppe ist.

**10.** Zusammensetzungen sowie darauf basierende Erzeugnisse gemäß einem oder mehreren der Ansprüche 1 bis 5, **dadurch gekennzeichnet, dass** als Komponente b)

Triethylenglycol-bis(3-tert-butyl-4-hydroxy-5-methylphenyl), Hexamethylen-bis[3-(3,5-di-tert-butyl-4-hydroxy-phenyl)propionat], N,N'-1,6-hexanediylbis[3,5-bis(1,1-dimethylethyl)-4-hydroxyphenylpropanamid], 3,9-Bis [2-[3-(3-tert-butyl-4-hydroxy-5-methylphenyl)-propionyloxy]-1,1-dimethylethyl]-2,4,8,10-tetraoxaspiro-[5.5]-undecan, Tetrakis[methylen-3-(3,5-di-tert-butyl-4-hydroxyphenyl)propionate]methan Thiodiethylen-bis[3-(3,5-di-tert-butyl-4-hydroxyphenyl)propionat], 1,3,5-Trimethyl-2,4,6-tris(3,5-di-tert-butyl-4-hydroxybenzyl)benzen oder 1,2-Bis(3,5-di-tert-butyl-4-hydroxyhydrocinnamoly)hydrazin, eingesetzt werden.

**11.** Zusammensetzungen sowie darauf basierende Erzeugnisse gemäß einem oder mehreren der Ansprüche 1 bis 5, **dadurch gekennzeichnet, dass** als Komponente b) sterisch gehinderte Phenole auszuwählen aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-proprionat], 1,3,5-Trimethyl-2,4,6-tris-(3,5-di-tert.-butyl-4-hydroxybenzyl)-benzol, 4,4'-Methylen-bis-(2,6-di-tert.-butylphenol) und 3,5-Di-tert.-butyl-4-hydroxybenzyldimethylamin
eingesetzt werden.

**12.** Zusammensetzungen sowie darauf basierende Erzeugnisse gemäß einem oder mehreren der Ansprüche 1 bis 11, **dadurch gekennzeichnet, dass** als Komponente c) Natriumhypophosphit oder Natriumhypophosphit Monohydrat eingesetzt werden.

**13.** Zusammensetzungen sowie darauf basierende Erzeugnisse gemäß einem oder mehreren der Ansprüche 1 bis 12, **dadurch gekennzeichnet, dass** als Komponente d) 3-Thiopropionate der allgemeinen Formel (VI) eingesetzt werden,

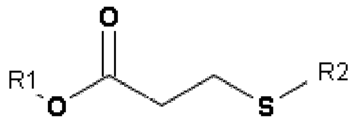

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht.

**14.** Verwendung von Mischungen enthaltend

a) wenigstens ein Polyamid,
b) wenigstens ein sterisch gehindertes Phenol,
c) wenigstens ein Phosphinsäurederivat der allgemeinen Formel (I),

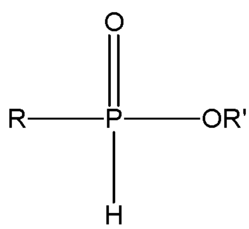

(I)

worin R für ein Wasserstoffatom oder für eine Alkyl-, Cycloalkyl- oder Aryl-Gruppe steht, und
R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) wenigstens ein 3-Thiopropionat, und
e) 4,4'-Bis(phenylisopropyl)diphenylamin

zur Herstellung Polyamid basierter Erzeugnisse, vorzugsweise zur Herstellung Polyamid basierter Erzeugnisse mit Erhalt der Schlagzähigkeit gemessen nach ISO180-1U und/oder Erhalt der Bruchdehnung gemessen nach ISO 527 nach Heißluftalterung über 500h bei 150°C und/oder Farberhalt berechnet gemäß DIN EN ISO 11664-4 nach Heißluftlagerung über 500h bei 150°C und/oder Farberhalt berechnet gemäß DIN EN ISO 11664-4 nach UV-Lagerung gemäß DIN ISO 4892-2A über 200h bei 80°C, 340 nm und 1,55 W/$m^2$ ohne Beregnung mit der Maßgabe, dass auf 100 Massenanteile wenigstens eines als Komponente a) einzusetzenden Polyamids, vorzugsweise Polyamid 6 oder Polyamid 66,
0,03 bis 3 Massenanteile, bevorzugt 0,05 bis 1 Massenanteile, der Komponente b),
0,05 bis 5 Massenanteile, bevorzugt 0,25 bis 1 Massenanteile, der Komponente c),
0,05 bis 5 Massenanteile, bevorzugt 0,2 bis 1 Massenanteile der Komponente d) und
0,05 bis 5 Massenanteile, bevorzugt 0,1 bis 1 Massenanteile, der Komponente e) eingesetzt werden.

**15.** Verfahren zum Erhalt der Schlagzähigkeit gemessen nach ISO180-1U und/oder zum Erhalt der Bruchdehnung gemessen nach ISO 527 nach Heißluftalterung über 500h bei 150°C und/oder zum Farberhalt berechnet gemäß DIN EN ISO 11664-4 nach Heißluftlagerung über 500h bei 150°C und/oder zum Farberhalt berechnet gemäß DIN EN ISO 11664-4 nach UV-Lagerung gemäß DIN ISO 4892-2A über 200h bei 80°C, 340 nm und 1,55 W/$m^2$ ohne Beregnung Polyamid basierter Erzeugnisse, **dadurch gekennzeichnet, dass** man

e) 0,05 bis 5 Massenanteile 4,4'-Bis(phenylisopropyl)diphenylamin auf
a) 100 Massenanteile eines als Komponente a) einzusetzenden Polyamids,
b) 0,03 bis 3 Massenanteile wenigstens eines sterisch gehinderten Phenols,
c) 0,05 bis 5 Massenanteile wenigstens eines Phosphinsäurederivats der allgemeinen Formel (I),

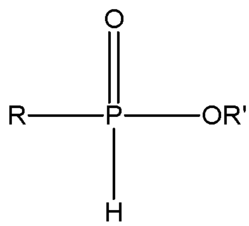
(I)

worin R für ein Wasserstoffatom oder für eine Alkyl-, Cycloalkyl- oder Aryl-Gruppe steht, und
R' für ein Alkalimetall, ein Erdalkalimetall, ein Metall der 12. oder 13. Gruppe des Periodensystems der Elemente, ein Ammonium-Ion oder für eine $C_1$-$C_{10}$Alkylgruppe steht, und

d) 0,05 bis 5 Massenanteile wenigstens eines 3-Thiopropionats einsetzt.

## Claims

**1.** Compositions and products based thereon comprising

a) at least one polyamide,
b) at least one sterically hindered phenol,
c) at least one phosphinic acid derivative of the general formula (I)

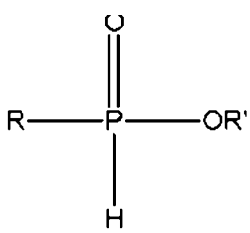
(I)

in which R is a hydrogen atom or is an alkyl, cycloalkyl or aryl group, and
R' is an alkali metal, an alkaline earth metal, a metal of Group 12 or 13 of the Periodic Table of the Elements, an ammonium ion or a $C_1$-$C_{10}$-alkyl group,

d) at least one 3-thiopropionate, and
e) 4,4'-bis(phenylisopropyl)diphenylamine,

with the proviso that, per 100 parts by mass of component a),
0.03 to 3 parts by mass of component b),
0.05 to 5 parts by mass of component c),
0.05 to 5 parts by mass of component d) and
0.05 to 5 parts by mass of component e) are used.

2. Compositions and products based thereon according to Claim 1, **characterized in that** these contain, in addition to components a), b), c), d) and e), also f) at least one filler, preferably glass fibres, in an amount of 5 to 185 parts by mass, based on 100 parts by mass of component a).

3. Compositions and products based thereon according to Claim 1 or 2, **characterized in that** these contain, in addition to components a), b), c), d) and e) or in addition to components a), b), c), d), e) and f), also at least one flame retardant g) different from components b), c), d), e) and f) in an amount of 3 to 100 parts by mass, based on 100 parts by mass of component a).

4. Compositions and products based thereon according to one or more of Claims 1 to 3, **characterized in that** polyamide 6, polyamide 66, polyamide -46 and/or semiaromatic copolyamides are used as component a), preferably polyamide 6 or polyamide 66.

5. Compositions and products based thereon according to one or more of Claims 1 to 4, **characterized in that** sterically hindered phenols of the general formula (II)

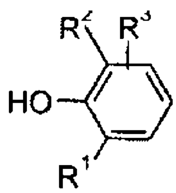

(II)

are used as component b) in which $R^1$ is a tert-butyl group, $R^2$ is an alkyl group having 1 to 9 carbon atoms and $R^3$ is an alkyl group, a substituted alkyl group, an alkoxy group or a substituted amino group.

6. Compositions and products based thereon according to Claim 5, **characterized in that** $R^1$ and $R^2$ in formula (II) are each a tert-butyl group and $R^3$ is an alkyl group, a substituted alkyl group, an alkoxy group or a substituted amino group.

7. Compositions and products based thereon according to Claim 5, **characterized in that** $R^1$ in formula (II) is a methyl group and $R^2$ is a substituted alkyl group and $R^3$ is an alkyl group, a substituted alkyl group, an alkoxy group or a substituted amino group.

8. Compositions and products based thereon according to Claim 5, **characterized in that** $R^1$ in formula (II) is a methyl group and $R^2$ is a tert-butyl group and $R^3$ is an alkyl group, a substituted alkyl group, an alkoxy group or a substituted amino group.

9. Compositions and products based thereon according to one or more of Claims 1 to 5, **characterized in that** component b) comprises compounds of the general formula (V)

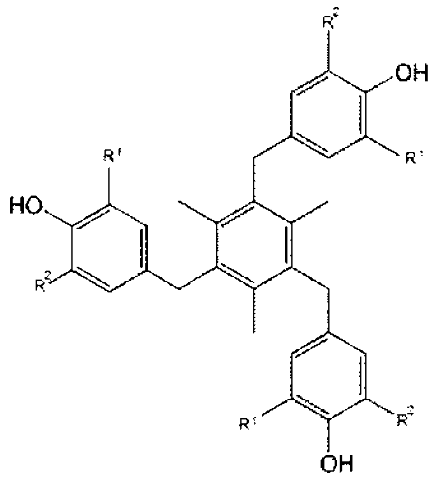

(V)

in which $R^1$ and $R^2$ are independently $C_1$-$C_8$-alkyl groups which may in turn be substituted, and at least one of which is a sterically demanding group.

**10.** Compositions and products based thereon according to one or more of Claims 1 to 5, **characterized in that**

triethylene glycol bis(3-tert-butyl-4-hydroxy-5-methylphenyl), hexamethylenebis[3-(3,5-di-tert-butyl-4-hydroxyphenyl)propionate], N,N'-1,6-hexanediylbis[3,5-bis(1,1-dimethylethyl)-4-hydroxyphenylpropanamide], 3,9-bis[2-[3-(3-tert-butyl-4-hydroxy-5-methylphenyl)-propionyloxy]-1,1-dimethylethyl]-2,4,8,10-tetraoxaspiro-[5.5]-undecane, tetrakis[methylene-3-(3,5-di-tert-butyl-4-hydroxyphenyl)propionate]methane thiodiethylenebis[3-(3,5-di-tert-butyl-4-hydroxyphenyl)propionate], 1,3,5-trimethyl-2,4,6-tris(3,5-di-tert-butyl-4-hydroxybenzyl)benzene or 1,2-bis(3,5-di-tert-butyl-4-hydroxyhydrocinnamoyl)hydrazine
is employed as component b).

**11.** Compositions and products based thereon according to one or more of Claims 1 to 5, **characterized in that** sterically hindered phenols to be selected from the group of 2,2'-methylenebis(4-methyl-6-tert-butylphenol), 1,6-hexanediol bis[3-(3,5-di-tert-butyl-4-hydroxyphenyl)propionate], pentaerythritol tetrakis[3-(3,5-di-tert-butyl-4-hydroxyphenyl)propionate], 1,3,5-trimethyl-2,4,6-tris-(3,5-di-tert-butyl-4-hydroxybenzyl)benzene, 4,4'-methylene-bis-(2,6-di-tert.-butylphenol) and 3,5-di-tert-butyl-4-hydroxybenzyldimethylamine are employed as component b).

**12.** Compositions and products based thereon according to one or more of Claims 1 to 11, **characterized in that** sodium hypophosphite or sodium hypophosphite monohydrate are employed as component c).

**13.** Compositions and products based thereon according to one or more of Claims 1 to 12, **characterized in that** 3-thiopropionates of the general formula (VI)

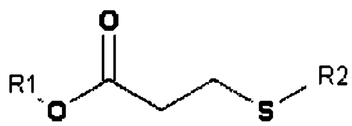

(VI)

are employed as component d), in which R1 is an alkyl group having 1 to 20 carbon atoms or a substituted alkyl group consisting of the elements carbon, hydrogen, sulfur and oxygen or optionally nitrogen and having up to 300 atoms, and R2 is an alkyl radical having 4 to 20 carbon atoms.

**14.** Use of mixtures comprising

a) at least one polyamide,
b) at least one sterically hindered phenol,

c) at least one phosphinic acid derivative of the general formula (I)

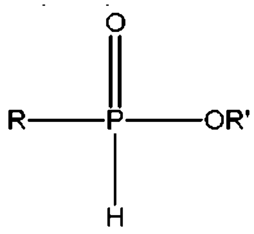

(I)

in which R is a hydrogen atom or is an alkyl, cycloalkyl or aryl group, and
R' is an alkali metal, an alkaline earth metal, a metal of group 12 or 13 of the Periodic Table of the Elements, an ammonium ion or a $C_1$-$C_{10}$-alkyl group, and

d) at least one 3-thiopropionate, and
e) 4,4'-bis(phenylisopropyl)diphenylamine,

for production of polyamide-based products, preferably for production of polyamide-based products with retention of impact strength measured to ISO180-1U and/or retention of elongation at break measured to ISO 527 after hot air ageing over 500 h at 150°C and/or colour retention calculated in accordance with DIN EN ISO 11664-4 after hot air storage over 500 h at 150°C and/or colour retention calculated in accordance with DIN EN ISO 11664-4 after UV storage in accordance with DIN ISO 4892-2A over 200 h at 80°C, 340 nm and 1.55 W/m$^2$ without irrigation, with the proviso that, per 100 parts by mass of at least one polyamide to be used as component a), preferably nylon-6 or nylon-6,6,
0.03 to 3 parts by mass, preferably 0.05 to 1 part by mass, of component b),
0.05 to 5 parts by mass, preferably 0.25 to 1 part by mass, of component c),
0.05 to 5 parts by mass, preferably 0.2 to 1 part by mass, of component d) and
0.05 to 5 parts by mass, preferably 0.1 to 1 part by mass, of component e) are used.

**15.** Method of retaining impact strength measured to ISO180-1U and/or of retaining elongation at break measured to ISO 527 after hot air ageing over 500 h at 150°C and/or of colour retention calculated in accordance with DIN EN ISO 11664-4 after hot air storage over 500 h at 150°C and/or of colour retention calculated in accordance with DIN EN ISO 11664-4 after UV storage in accordance with DIN ISO 4892-2A over 200 h at 80°C, 340 nm and 1.55 W/m$^2$ without irrigation, of polyamide-based products, **characterized in that**

e) 0.05 to 5 parts by mass of 4,4'-bis(phenylisopropyl)diphenylamine is used per
a) 100 parts by mass of a polyamide to be used as component a),
b) 0.03 to 3 parts by mass of at least one sterically inhibited phenol,
c) 0.05 to 5 parts by mass of at least one phosphinic acid derivative of the general formula (I)

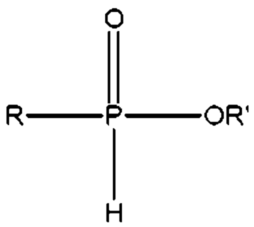

(I)

in which R is a hydrogen atom or is an alkyl, cycloalkyl or aryl group, and
R' is an alkali metal, an alkaline earth metal, a metal of group 12 or 13 of the Periodic Table of the Elements, an ammonium ion or a $C_1$-$C_{10}$-alkyl group, and

c) 0.05 to 5 parts by mass of at least one 3-thiopropionate.

**Revendications**

1. Compositions et produits à base de celles-ci contenant

   a) au moins un polyamide,
   b) au moins un phénol à encombrement stérique,
   c) au moins un dérivé d'acide phosphinique de formule générale (I),

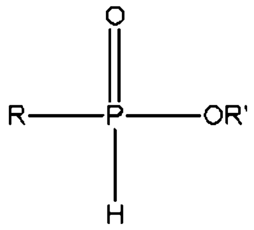

(I)

dans laquelle R représente un atome d'hydrogène ou un groupe alkyle, cycloalkyle ou aryle, et R' représente un métal alcalin, un métal alcalino-terreux, un métal du groupe 12 ou 13 du tableau périodique des éléments, un ion ammonium ou un groupe alkyle en $C_1$-$C_{10}$,

   d) au moins un 3-thiopropionate, et
   e) de la 4,4'-bis(phénylisopropyl)diphénylamine

à condition que, pour 100 parties en masse du composant a)
0,03 à 3 parties en masse du composant b),
0,05 à 5 parties en masse du composant c),
0,05 à 5 parties en masse du composant d) et
0,05 à 5 parties en masse du composant e) soient utilisées.

2. Compositions et produits à base de celles-ci selon la revendication 1, **caractérisés en ce que** ceux-ci contiennent, en plus des composants a), b), c), d) et e), au moins une charge f), de préférence des fibres de verre, à raison de 5 à 185 parties en masse par rapport à 100 parties en masse du composant a).

3. Compositions et produits à base de celles-ci selon la revendication 1 ou 2, **caractérisés en ce que** ceux-ci contiennent, en plus des composants a), b), c), d) et e) ou en plus des composants a), b), c), d), e) et f), encore au moins un agent ignifuge g) différent des composants b), c), d), e) et f) à raison de 3 à 100 parties en masse, par rapport à 100 parties en masse du composant a).

4. Compositions et produits à base de celles-ci selon une ou plusieurs des revendications 1 à 3, **caractérisés en ce que** l'on utilise en tant que composant a) du polyamide 6, du polyamide 66, du polyamide 46 et/ou des copolyamides partiellement aromatiques, de préférence du polyamide 6 ou du polyamide 66.

5. Compositions et produits à base de celles-ci selon une ou plusieurs des revendications 1 à 4, **caractérisés en ce que** l'on utilise en tant que composant b) des phénols à encombrement stérique de formule générale (II),

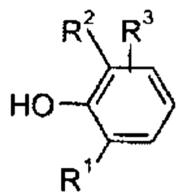

(II)

dans laquelle $R^1$ représente un groupe tert-butyle, $R^2$ représente un groupe alkyle ayant 1 à 9 atomes de carbone et $R^3$ représente un groupe alkyle, un groupe alkyle substitué, un groupe alcoxy ou un groupe amino substitué.

6. Compositions et produits à base de celles-ci selon la revendication 5, **caractérisés en ce que**, dans la formule (II), $R^1$ et $R^2$ représentent chacun un groupe tert-butyle et $R^3$ représente un groupe alkyle, un groupe alkyle substitué, un groupe alcoxy ou un groupe amino substitué.

7. Compositions et produits à base de celles-ci selon la revendication 5, **caractérisés en ce que**, dans la formule (II), $R^1$ représente un groupe méthyle, $R^2$ représente un groupe alkyle substitué et $R^3$ représente un groupe alkyle, un groupe alkyle substitué, un groupe alcoxy ou un groupe amino substitué.

8. Compositions et produits à base de celles-ci selon la revendication 5, **caractérisés en ce que**, dans la formule (II), $R^1$ représente un groupe méthyle, $R^2$ représente un groupe tert-butyle et $R^3$ représente un groupe alkyle, un groupe alkyle substitué, un groupe alcoxy ou un groupe amino substitué.

9. Compositions et produits à base de celles-ci selon une ou plusieurs des revendications 1 à 5, **caractérisés en ce que** l'on utilise en tant que composant b) des composés de formule générale (V)

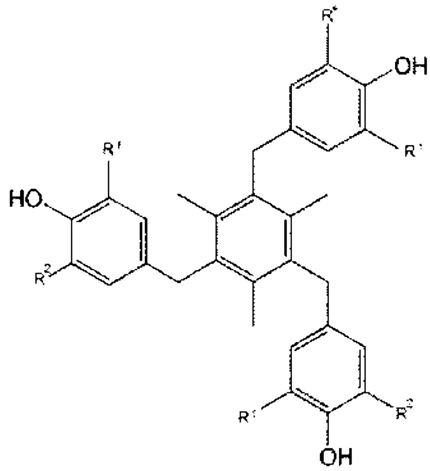

(V)

dans laquelle $R^1$ et $R^2$ représentent indépendamment l'un de l'autre des groupes alkyle en $C_1$-$C_8$ qui peuvent eux-mêmes être substitués et dont au moins l'un est un groupe stériquement encombré.

10. Compositions et produits à base de celles-ci selon une ou plusieurs des revendications 1 à 5, **caractérisés en ce que** l'on utilise en tant que composant b)

le triéthylèneglycol-bis(3-tert-butyl-4-hydroxy-5-méthylphényle), l'hexaméthylène-bis[3-(3,5-di-tert-butyl-4-hydroxyphényl)propionate],
le N,N'-1,6-hexanediylbis[3,5-bis(1,1-diméthyléthyl)-4-hydroxyphénylpropanamide],
le 3,9-bis[2-[3-(3-tert-butyl-4-hydroxy-5-méthylphényl)-propionyloxy]-1,1-diméthyléthyl]-2,4,8,10-tétraoxaspiro-[5.5]-undécane,
le tétrakis[méthylèn-3-(3,5-di-tert-butyl-4-hydroxyphényl)propionate]méthane
le thiodiéthylène-bis[3-(3,5-di-tert-butyl-4-hydroxyphényl)propionate],
le 1,3,5-triméthyl-2,4,6-tris(3,5-di-tert-butyl-4-hydroxybenzyl)benzène ou
la 1,2-bis(3,5-di-tert-butyl-4-hydroxyhydrocinnamoly)hydrazine.

11. Compositions et produits à base de celles-ci selon une ou plusieurs des revendications 1 à 5, **caractérisés en ce que** l'on utilise en tant que composant b)
des phénols à encombrement stériques choisis dans le groupe 2,2'-méthylène-bis-(4-méthyl-6-tert.-butylphénol), 1,6-hexanediol-bis[3-(3,5-di-tert.-butyl-4-hydroxyphényl)-propionate], pentaérythril-tétrakis-[3-(3,5-di-tert.-butyl-4-hydroxyphényl)-proprionate], 1,3,5-triméthyl-2,4,6-tris-(3,5-di-tert.-butyl-4-hydroxybenzyl)-benzène, 4,4'-méthylèn-bis-(2,6-di-tert.-butylphénol) et 3,5-di-tert.-butyl-4-hydroxybenzyldiméthylamine

12. Compositions et produits à base de celles-ci selon une ou plusieurs des revendications 1 à 11, **caractérisés en ce que** l'on utilise en tant que composant c) l'hypophosphite de sodium ou l'hypophosphite de sodium monohydrate.

**13.** Compositions et produits à base de celles-ci selon une ou plusieurs des revendications 1 à 12, **caractérisés en ce que** l'on utilise en tant que composant d) des 3-thiopropionates de formule générale (VI)

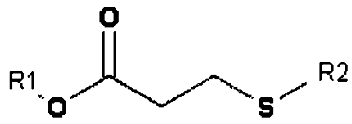

(VI)

dans laquelle R1 représente un groupe alkyle comportant 1 à 20 atomes de carbone ou un groupe alkyle substitué constitué des éléments carbone, hydrogène, soufre et oxygène ou éventuellement azote, comportant jusqu'à 300 atomes, et R2 représente un radical alkyle comportant 4 à 20 atomes de carbone.

**14.** Utilisation de mélanges contenant

a) au moins un polyamide,
b) au moins un phénol à encombrement stérique,
c) au moins un dérivé d'acide phosphinique de formule générale (I),

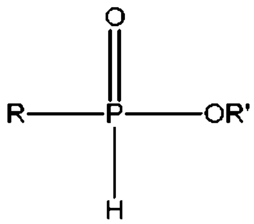

(I)

dans laquelle R représente un atome d'hydrogène ou un groupe alkyle, cycloalkyle ou aryle, et
R' représente un métal alcalin, un métal alcalino-terreux, un métal du groupe 12 ou 13 du tableau périodique des éléments, un ion ammonium ou un groupe alkyle en $C_1$-$C_{10}$, et

c) au moins un 3-thiopropionate, et
d) de la 4,4'-bis(phénylisopropyl)diphénylamine

pour la fabrication de produits à base de polyamide, de préférence pour la fabrication de produits à base de polyamide avec conservation de la résistance aux chocs mesurée selon ISO180-1U et/ou conservation de l'allongement à la rupture mesuré selon ISO 527 après vieillissement à l'air chaud pendant plus de 500 h à 150 °C et/ou conservation de la couleur calculée selon DIN EN ISO 11664-4 après stockage à l'air chaud pendant plus de 500 h à 150 °C et/ou la conservation de la couleur calculée selon DIN EN ISO 11664-4 après stockage sous UV selon DIN ISO 4892-2A pendant plus de 200 h à 80 °C, 340 nm et 1,55 W/$m^2$ sans arrosage, à condition que l'on utilise, pour 100 parties en masse d'au moins un polyamide à utiliser en tant que composant a), de préférence le polyamide 6 ou le polyamide 66,
0,03 à 3 parties en masse, de préférence 0,05 à 1 partie en masse, du composant b),
0,05 à 5 parties en masse, de préférence 0,25 à 1 partie en masse, du composant c),
0,05 à 5 parties en masse, de préférence 0,2 à 1 partie en masse, du composant d), et
0,05 à 5 parties en masse, de préférence 0,1 à 1 partie en masse, du composant e).

**15.** Procédé pour la conservation de la résistance aux chocs mesurée selon ISO180-1U et/ou pour la conservation de l'allongement à la rupture mesuré selon ISO 527 après vieillissement à l'air chaud pendant plus de 500 h à 150 °C et/ou pour la conservation de la couleur calculée selon DIN EN ISO 11664-4 après stockage à l'air chaud pendant plus de 500 h à 150 °C et/ou pour la conservation de la couleur calculée selon DIN EN ISO 11664-4 après stockage sous UV selon DIN ISO 4892-2A pendant plus de 200 h à 80 °C, 340 nm et 1,55 W/$m^2$ sans arrosage, de produits à base de polyamide, **caractérisé en ce que** l'on utilise

e) 0,05 à 5 parties en masse de 4,4'-bis(phénylisopropyl)diphénylamine pour
a) 100 parties en masse d'un polyamide à utiliser en tant que composant a),

b) 0,03 à 3 parties en masse d'au moins un phénol à encombrement stérique,
c) 0,05 à 5 parties en masse d'au moins un dérivé d'acide phosphinique de formule générale (I),

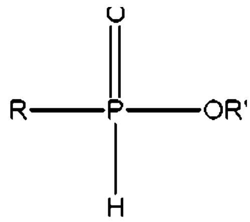

(I)

dans laquelle R représente un atome d'hydrogène ou un groupe alkyle, cycloalkyle ou aryle, et
R' représente un métal alcalin, un métal alcalino-terreux, un métal du groupe 12 ou 13 du tableau périodique des éléments, un ion ammonium ou un groupe alkyle en $C_1$-$C_{10}$, et

d) 0,05 à 5 parties en masse d'au moins un 3-thiopropionate.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2005033185 A1
- EP 20177768
- DE 102011084519 A1
- DE 2702661 A
- DE 4236122 A
- WO 2013083247 A1
- EP 0113229 B1
- WO 2009003976 A1

### In der Beschreibung aufgeführte Nicht-Patentliteratur

- Kunststoffhandbuch 3/4, Technische Thermoplaste, Polyamide. Karl Hansen Verlag, 1998, vol. 16, 148-150
- Kunststoffhandbuch 3/4, Technische Thermoplaste, Polyamide. Karl Hansen Verlag, 1998
- Glasfaserverstärkte Thermoplaste. **P. H. SELDEN** ; **K. SCHLICHTING**. Glasfaserverstärkte Kunststoffe. Springer Verlag, 1967, 324-325
- *CHEMICAL ABSTRACTS*, 25038-54-4
- *CHEMICAL ABSTRACTS*, 32131-17-2
- *CHEMICAL ABSTRACTS*, 36443-68-2
- *CHEMICAL ABSTRACTS*, 35074-77-2
- *CHEMICAL ABSTRACTS*, 23128-74-7
- *CHEMICAL ABSTRACTS*, 90498-90-1
- *CHEMICAL ABSTRACTS*, 6683-19-8
- *CHEMICAL ABSTRACTS*, 41484-35-9
- *CHEMICAL ABSTRACTS*, 1709-70-2
- *CHEMICAL ABSTRACTS*, 32687-78-8
- *CHEMICAL ABSTRACTS*, 7681-53-0
- *CHEMICAL ABSTRACTS*, 10039-56-2
- *CHEMICAL ABSTRACTS*, 29598-76-3
- *CHEMICAL ABSTRACTS*, 10081-67-1
- *CHEMICAL ABSTRACTS*, 7440-44-0
- *CHEMICAL ABSTRACTS*, 65997-17-3
- *CHEMICAL ABSTRACTS*, 7631-86-9
- *CHEMICAL ABSTRACTS*, 14808-60-7
- *CHEMICAL ABSTRACTS*, 1344-95-2
- *CHEMICAL ABSTRACTS*, 10101-39-0
- *CHEMICAL ABSTRACTS*, 546-93-0
- *CHEMICAL ABSTRACTS*, 1332-58-7
- *CHEMICAL ABSTRACTS*, 92704-41-1
- *CHEMICAL ABSTRACTS*, 1317-65-3
- *CHEMICAL ABSTRACTS*, 1302-76-7
- *CHEMICAL ABSTRACTS*, 1318-94-1
- *CHEMICAL ABSTRACTS*, 12251-00-2
- *CHEMICAL ABSTRACTS*, 7727-43-7
- *CHEMICAL ABSTRACTS*, 68476-25-5
- *CHEMICAL ABSTRACTS*, 13983-17-0
- *CHEMICAL ABSTRACTS*, 67479-91-8
- *CHEMICAL ABSTRACTS*, 12125-28-9
- *CHEMICAL ABSTRACTS*, 14807-96-6
- Chemie Ingenieur Technik. Wiley-VCH Verlags GmbH, 2000, 273-276
- *CHEMICAL ABSTRACTS*, 1309-42-8
- *CHEMICAL ABSTRACTS*, 1078142-02-5
- *CHEMICAL ABSTRACTS*, 225789-38-8
- *CHEMICAL ABSTRACTS*, 71449-76-8
- *CHEMICAL ABSTRACTS*, 156024-71-4
- *CHEMICAL ABSTRACTS*, 14059-33-7
- *CHEMICAL ABSTRACTS*, 1309-37-1
- *CHEMICAL ABSTRACTS*, 13463-67-7
- *CHEMICAL ABSTRACTS*, 1317-70-0
- *CHEMICAL ABSTRACTS*, 1314-98-3
- *CHEMICAL ABSTRACTS*, 12014-93-6
- *CHEMICAL ABSTRACTS*, 12031-49-1
- *CHEMICAL ABSTRACTS*, 923954-49-8
- *CHEMICAL ABSTRACTS*, 2170864-77-2
- *CHEMICAL ABSTRACTS*, 817181-98-9
- *CHEMICAL ABSTRACTS*, 42844-93-9
- *CHEMICAL ABSTRACTS*, 72102-84-2
- *CHEMICAL ABSTRACTS*, 56279-27-7
- *CHEMICAL ABSTRACTS*, 13676-91-0
- *CHEMICAL ABSTRACTS*, 203576-97-0
- *CHEMICAL ABSTRACTS*, 6925-69-5
- *CHEMICAL ABSTRACTS*, 98460-24-3
- *CHEMICAL ABSTRACTS*, 8013-07-8
- *CHEMICAL ABSTRACTS*, 115-83-3
- *CHEMICAL ABSTRACTS*, 557-05-1
- *CHEMICAL ABSTRACTS*, 1592-23-0
- *CHEMICAL ABSTRACTS*, 110-30-5
- Kunststoff-Handbuch 3/4, Polyamide. Carl Hanser Verlag, 1998, 374-384